# EUROPEAN PATENT SPECIFICATION

(11) **EP 3 142 374 B1**
(45) Date of publication and mention of the grant of the patent: **07.10.2020**
(21) Application number: 15789636.6
(22) Date of filing: 17.04.2015
(51) Int. Cl.: H04N 21/435, G06F 13/00, H04N 21/235, H04L 29/08, H04N 21/262, H04N 21/84, H04N 21/8543

(54) **RECEIVING DEVICE, TRANSMISSION DEVICE, DATA COMMUNICATION METHOD, AND DATA PROCESSING METHOD**
EMPFANGSVORRICHTUNG, ÜBERTRAGUNGSVORRICHTUNG, DATENKOMMUNIKATIONSVERFAHREN UND DATENVERARBEITUNGSVERFAHREN
DISPOSITIF DE RÉCEPTION, DISPOSITIF DE TRANSMISSION, PROCÉDÉ DE COMMUNICATION DE DONNÉES ET PROCÉDÉ DE TRAITEMENT DE DONNÉES

(30) Priority: 07.05.2014 JP 2014095743
(43) Date of publication of application: 15.03.2017
(73) Proprietor: Sony Corporation, Tokyo 108-0075 (JP)
(72) Inventor: YAMAGISHI, Yasuaki, Tokyo 108-0075 (JP)
(74) Representative: Witte, Weller & Partner Patentanwälte mbB
(86) International application number: PCT/JP2015/061802
(87) International publication number: WO 2015/170565

(56) References cited:
- JP-A- 2013 535 057
- JP-A- 2014 057 227
- US-A1- 2014 101 118
- "3rd Generation Partnership Project; Technical Specification Group Services and System Aspects; Packet-Switched Streaming Service (PSS) Improved Support for Dynamic Adaptive Streaming over HTTP in 3GPP (Release 12)", 3GPP DRAFT; TR26.938-051-IS-DASH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 May 2013 (2013-05-13), XP050710144, Retrieved from the Internet: URL:http://www.3gpp.org/ftp/tsg_sa/WG4_COD EC/Ad-hoc_MBS/Docs_AHI/ [retrieved on 2013-05-13]
- DAVID FURBECK: "DASH MPD Delta Files", 94. MPEG MEETING; 11-10-2010 - 15-10-2010; GUANGZHOU; (MOTION PICTURE EXPERT GROUP OR ISO/IEC JTC1/SC29/WG11),, no. M18482, 4 October 2010 (2010-10-04), XP030047072,

## Description

### TECHNICAL FIELD

The present disclosure relates to a receiver, a transmitter, a data communication method, and a data processing method. More particularly, the present disclosure relates to a receiver, a transmitter, a data communication method, and a data processing method for communication data which execute transmission or reception of data through, for example, a broadcast wave or a network.

### BACKGROUND ART

Over the top (OTT) is provided as a data delivery system capable of delivering a content, such as image data or audio data, regardless of the service form of each carrier. The content to be delivered by OTT is called an OTT content, and an image (video) data delivery service using the OTT is called over the top video (OTT-V).

Dynamic adaptive streaming overHTTP (DASH) is provided as a data streaming delivery standard in accordance with the OTT-V. DASH is a standard regarding adaptive streaming delivery using a streaming protocol based on hypertext transfer protocol (HTTP).

In adaptive streaming, a content delivery server creates segmentation files including moving image contents of a plurality of bit rates and a manifest file describing attribute information and URL thereof, and provides the files to clients so that the content can be reproduced in various clients to whom data is delivered.

Each client acquires the manifest file from the server, selects a content of an optimum bit rate depending on the size of a display unit of his/her own device and an available communication band, and receives and reproduces the selected content. Also, a dynamic change of the bit rate can be made to cope with fluctuations in the network band, and each client can switch and receive an appropriate content, as needed, depending on the situation, thereby achieving the moving image content reproduction in which the occurrence of a video interruption is reduced. Note that the adaptive streaming is disclosed in, for example, Patent Document 1 (Japanese Patent Application Laid-Open No. 2011-87103).

Third generation partnership project (3GPP) which is an international standard-setting body proposes a system in which the load on network resources is reduced using point 2 point (P2P) communication, which is one-on-one data communication, as well as a multicast or broadcast (MC/BC) bearer, when content broadcast delivery is performed in accordance with the DASH standard.

A broadcast delivery service in accordance with the DASH standard is called multimedia broadcast multicast service (MBMS). As a system for efficiently implementing the MBMS in LTE, evolved multimedia broadcast multicast service (eMBMS) is provided.

MBMS and eMBMS are broadcast delivery services which are services for delivering the same data, for example, a movie content, to a plurality of user terminals (UEs) located in a specific area by a common bearer. The broadcast delivery in accordance with MBMS or eMBMS makes it possible to simultaneously provide the same content to a large number of user terminals, such as smartphones, PCs, or televisions, which are located in a delivery service providing area.

### CITATION LIST

### PATENT DOCUMENT

Patent Document 1: Japanese Patent Application Laid-Oen No. 2011-87103

Document "3rd Generation Partnership Project; Technical Specification Group Services and System Aspects; Packet-Switched Streaming Service (PSS) Improved Support for Dynamic Adaptive Streaming over HTTP in 3GPP (Release 12)", 3GPP DRAFT; TR26.938-051-IS-DASH details a method to update an MPEG-DASH MPD using a detla file.

### SUMMARY OF THE INVENTION

### PROBLEMS TO BE SOLVED BY THE INVENTION

When contents of various programs and the like, such as sports broadcast, are delivered by MBMS which is a broadcast delivery service as described above, a receiver of a user terminal, such as a smartphone, a PC, or a television, needs to acquire information required for processing a delivery content in advance separately from a program content.

For example, program schedule information, such as a program table, address information (URL or the like) required for acquiring a program, and information required for a content reproducing process, such as codec information (a coding system or the like), are received prior to the reception of the program content.

These pieces of information are transmitted from the content delivery server, or a transmitter, such as a broadcasting station, as data in the format of, for example, extensible markup language (XML), which is called signaling data, to the receiver (client) that is a user terminal such as a smartphone or a television.

The signaling data is repeatedly transmitted, as needed, assuming that there are receivers (clients) that start receiving the program content at various timings. For example, the signaling data is repeatedly transmitted frequently, for example, per 1/100 msec.

By repeatedly transmitting the signaling data at short intervals, the client (receiver) can receive the signaling data, as needed, and can execute, without delay, acquisition of an address for accessing a necessary program content, and a process necessary for receiving and reproducing the program content, such as a codec setting process, on the basis of the signaling data.

However, the repeated transmission of the signaling data causes problems such as an increase in the processing load on the transmitter and compression of a communication band.

The signaling data is mainly composed of textual description type XML data. Accordingly, a large amount of data and a communication band are consumed, and a delay in delivering the program content may occur due to, for example, compression of the use band of the program content which is a major content.

The present disclosure has been made in view of, for example, the above-mentioned problems, and an object of the present disclosure is to provide a receiver, a transmitter, a data communication method, and a data processing method which are capable of reducing the amount of delivery data of signaling data, reducing the processing load on the transmitter, and enabling an efficient delivery of signaling data.

### SOLUTIONS TO PROBLEMS

The scope of the invention is defined by the appended claims.

### EFFFCTS OF THE INVENTION

According to a configuration of an example of the present disclosure, a device and a method for implementing an efficient delivery of signaling data required for reception and reproduction of a content are achieved.

Specifically, the receiver stores and holds, in a storage unit, a signaling template as a template for generating a signaling instance required for a content reception process and a content reproduction process. The transmitter transmits, to the receiver, difference information as data to be applied to the signaling template and used for generating a signaling instance. The receiver generates the signaling instance by applying the difference information received from the transmitter to the signaling template, and receives and reproduces a content with reference to the generated signaling instance.

According to this configuration, a device and a method for implementing an efficient delivery of signaling data required for reception and reproduction of a content are achieved.

Note that the advantages described in the specification are merely examples and are not limited to these. Additional advantages may also be provided.

### BRIEF DESCRIPTION OF DRAWINGS

Fig. 1 is a diagram illustrating a configuration example of a communication system that executes processes of the present disclosure.
Fig. 2 is a diagram illustrating transmitted data from a transmitter.
Fig. 3 is a diagram illustrating an example of signaling data.
Fig. 4 is a diagram illustrating an example of user service description (USD).
Fig. 5 is a diagram illustrating an example of file delivery description (FDD).
Fig. 6 is a diagram illustrating an example of session description (SDP).
Fig. 7 is a diagram illustrating processing to be executed by a transmitter (server) and a receiver (client).
Fig. 8 is a diagram illustrating an example of an XML signaling template and an XML signaling instance.
Fig. 9 is a diagram illustrating an example of difference information.
Fig. 10 is a diagram illustrating an example of an XML signaling template for MPD.
Fig. 11 is a diagram illustrating a specific example of difference information applied to the XML signaling template for MPD shown in Fig. 10.
Fig. 12 is a diagram illustrating a specific example of an XML signaling instance generated by applying the difference information shown in Fig. 11 to the XML signaling template for MPD shown in Fig. 10.
Fig. 13 is a diagram showing an example of protocol stacks of the transmitter and the receiver.
Fig. 14 is a diagram illustrating a process to be executed by the transmitter and the receiver.
Fig. 15 is a diagram illustrating an example of a process sequence executed by the transmitter and the receiver.
Fig. 16 is a diagram illustrating an example of a process sequence executed by the transmitter and the receiver.
Fig. 17 is a diagram illustrating an example of a process sequence executed by the transmitter and the receiver.
Fig. 18 is a diagram illustrating a processing example when only broadcast delivery data such as a broadcast wave is received.
Fig. 19 is a diagram illustrating a processing example when two pieces of delivery data including broadcast delivery data through a broadcast wave or the like, and unicast delivery data, such as point 2 point (P2P) are used in combination.
Fig. 20 is a diagram illustrating a processing example when only broadcast delivery data through a broadcast wave or the like, is received and electronic service guide (ESG) including data, such a program table, is used.
Fig. 21 is a diagram illustrating a specific method of a process of transforming XML data.
Fig. 22 is a diagram illustrating configuration examples of a transmitter and a receiver as communication devices.
Fig. 23 is a diagram illustrating hardware configuration examples of a transmitter and a receiver which are communication devices.

### MODE FOR CARRYING OUT THE INVENTION

A receiver, a transmitter, a data communication method, a data processing method according to the present disclosure will be described in detail below with reference to the drawings . Note that the description is made regarding the following items.
1. Regarding a configuration example of a communication system
2. Regarding details of signaling data
3. Regarding an example of a signaling data delivery process using an XML signaling template
4. Regarding a specific example of XML data
5. Regarding an example of a communication process executed by a transmitter and a receiver
6. Regarding a process sequence executed by the transmitter and the receiver
7. Regarding a specific example of a data delivery process
8. Regarding a process of transforming XML data to which difference information is applied
9. Regarding configuration examples of the transmitter and the receiver
10. Summary of the configuration of the present disclosure

### [1. Regarding a configuration example of a communication system]

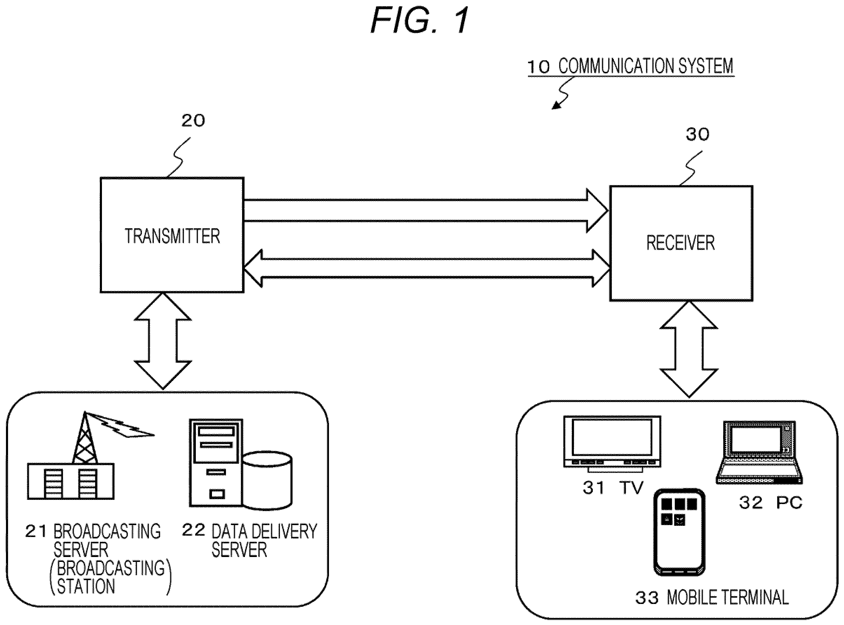

First, a configuration example of a communication system that executes a process of the present disclosure will be described with reference to Fig. 1.

As shown in Fig. 1, a communication system 10 includes a transmitter 20 which is a communication device that transmits a content, such as image data or audio data, and a receiver 30 which is a communication device that receives the content transmitted from the transmitter 20.

The transmitter 20 is a device that provides the content, and more specifically, is, for example, a broadcasting station 21, a content server 22, or the like.

On the other hand, the receiver 30 is a client device of a general user, and is specifically composed of a television 31, a PC 32, a mobile terminal 33, or the like.

A data communication between the transmitter 20 and the receiver 30 is performed as at least one of bidirectional communication via a network, such as the Internet, uni-directional communication or uni-directional communication through a broadcast wave or the like, or communication using one or both of them.

The content transmission from the transmitter 20 to the receiver 30 is executed in accordance with the MPEG-DASH standard which is a standard of an adaptive streaming technique.

The MPEG-DASH standard includes the following two standards:
(a) a standard regarding a manifest file (MPD: Media Presentation Description) for describing metadata as information for managing a moving image and an audio file; and
(b) a standard regarding a file/format (segment format) for transmitting a moving image content.

The content delivery from the transmitter 20 to the receiver 30 is executed in accordance with the above-mentioned MPEG-DASH standard.

The transmitter 20 encodes the content data and generates a data file including metadata of coded data and coded data. The coding process is performed in accordance with, for example, the MP4 file format specified in MPEG. Note that the data file encoded when the transmitter 20 generates a data file of an MP4 format is called "mdat", and the metadata is called "moov", "moof", or the like.

Examples of the content provided to the receiver 30 by the transmitter 20 include various data such as music data, video data such as a movie, a television program, a video, a photograph, a document, a painting, and a chart, a game, and software.

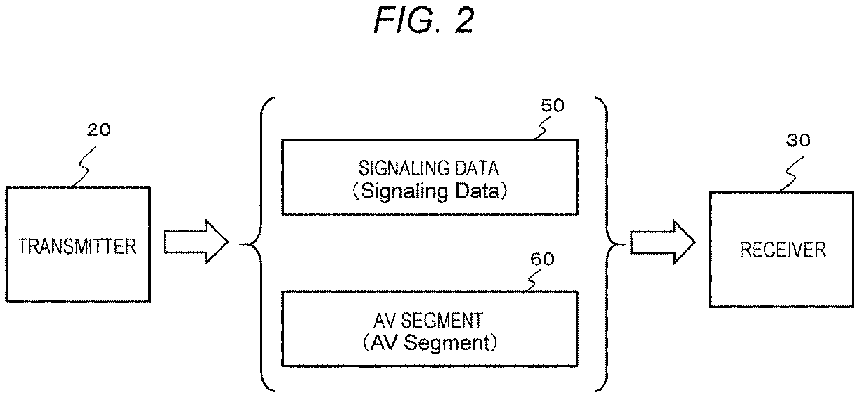

The transmitted data from the transmitter 20 will be described with reference to Fig. 2.

The transmitter 20 that executes the data transmission in accordance with the MPEG-DASH standard transmits the following general two types of data as shown in Fig. 2:
(a) signaling data 50; and
(b) AV segment 60.

The AV segment 60 is composed of an image (video) or audio (audio) data to be reproduced in the receiver, i.e., the program content provided by, for example, a broadcasting station. For example, the AV segment 60 is composed of the above-mentionedMP4 coded data (mdat) ormetadata (moov, moof).

On the other hand, the signaling data 50 is composed of program schedule information, such as a program table, address information (URL or the like) necessary for acquiring a program, information required for a content reproducing process, guide information and control information, such as codec information (a coding system or the like).

It is necessary for the receiver 30 to receive the signaling data 50 prior to the reception of the AV segment 60 storing the program content to be reproduced.

The signaling data 50 is transmitted to the receiver (client) which is a user terminal, such as a smartphone or a television, as data of, for example, an extensible markup language (XML) format.

As described above, the signaling data is repeatedly transmitted, as needed. For example, the signaling data is repeatedly transmitted frequently, for example, per 1/100 msec.

This is for the purpose of enabling the receiver (client) to acquire the signaling data immediately at any time. The client (receiver) can execute, without delay, acquisition of an address for accessing a necessary program content, and a process necessary for receiving and reproducing the program content, such as a codec setting process, on the basis of receivable signaling data, as needed.

However, the process of frequently transmitting signaling data increases the processing load on the transmitter. In addition, the signaling data which is mainly composed of textual description type XML data has a problem in that the amount of data is large and the communication band is compressed.

As described above, the multimedia broadcast multicast service (MBMS) and evolved multimedia broadcast multicast service (eMBMS) which specify a system that performs content broadcast delivery allow for use of point 2 point (P2P) communication, which is one-on-one data communication, as well as multicast or broadcast (MC/BC) communication. Consequently, the load on network resources can be reduced.

MBMS and eMBMS are broadcast delivery services for delivering the same data, such as a movie content, to a plurality of user terminals (UEs), which are located in a specific area, simultaneously by a common bearer. The same content can be simultaneously provided to a large number of user terminals, such as smartphones, PCs, or televisions, which are located in the delivery service providing area.

MBMS and eMBMS specify a process of downloading a file compliant with a 3GPP file format (ISO-BMFF file, MP4 file) in accordance with a transfer protocol: file delivery over uni-directional transport (FLUTE).

Many of the following two data items shown in Fig. 2:
(a) signaling data 50; and
(b) AV segment 60
are transmitted in accordance with the FLUTE protocol.

### [2. Regarding details of signaling data]

The signaling data is data that includes access information of the AV segment to be received and reproduced by the receiver (client), and guide information and control information required for processes after reception, such as a decoding process, and is repeatedly transmitted, as needed, from the transmitter.

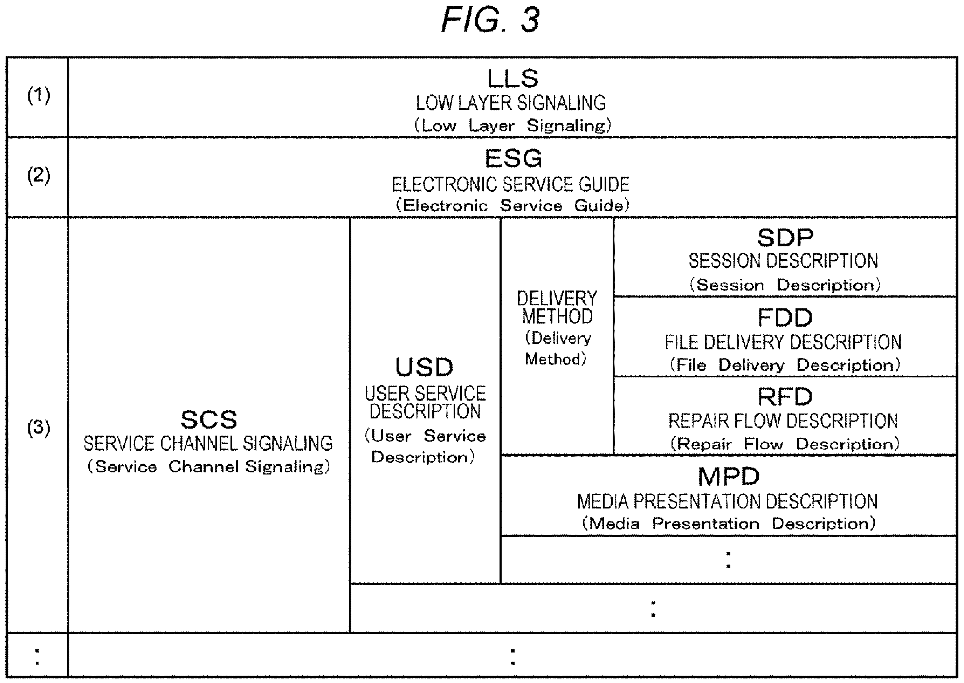

A configuration example of the signaling data will be described with reference to Fig. 3.

Fig. 3 is a diagram illustrating an example of the signaling data.

There are various types of signaling data depending on information. Fig. 3 shows the following three types of typical signaling data.
(1) low layer signaling (LLS)
(2) electronic service guide (ESG)
(3) service channel signaling (SCS)

(1) LLS is signaling data called Low Layer Signaling and includes communication setting information and address information to be applied to data reception in the receiver (client). LLS includes information for, for example, accessing SCS signaling data shown in (3).
(2) ESG represents Electronic Service Guide and is signaling data including guide information such as a program table.
(3) SCS represents Service Channel Signaling and includes guide information and control information corresponding to the content to be provided to the user.

Note that SCS includes a plurality of pieces of signaling data in units of various pieces of information.

Specifically, SCS includes user service description (USD) which is signaling data per service.

USD further includes the following three types of signaling data storing information about delivery methods.
session description (SDP)
file delivery description (FDD)
repair flow description (RFD)
USD further includes media presentation description (MPD) as signaling data including a manifest file storing various pieces of guide information and control information corresponding to the content (AV segment).

These various pieces of signaling data are data required for each receiver (client) to receive and reproduce the AV segment transmitted from the transmitter. Basically, the signaling data is set as an individual file (metafile) for each category and is transmitted from the transmitter.

Note that, in the process of the present disclosure, a process of transmitting only a part of the difference information is executed, instead of transmitting the entire XML data constituting the signaling data, to improve the efficiency in delivering the signaling data. The specific process will be described later.

Note that the signaling data shown in Fig. 3 is only an example, and there are also other pieces of signaling data.

The pieces of signaling data of LLS, ESG, SCS, USD, and the like shown in Fig. 3 are set as a metafile in which XML data is described in many cases.

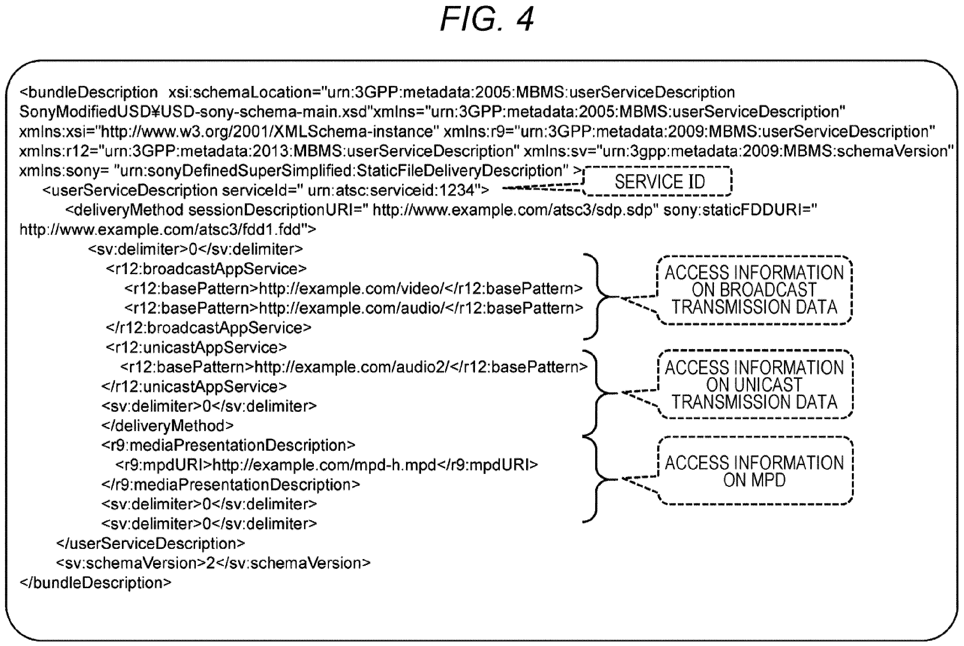

Figs. 4 to 6 show examples of metafiles constituting the signaling data.

Fig. 4 is an example of user service description (USD).

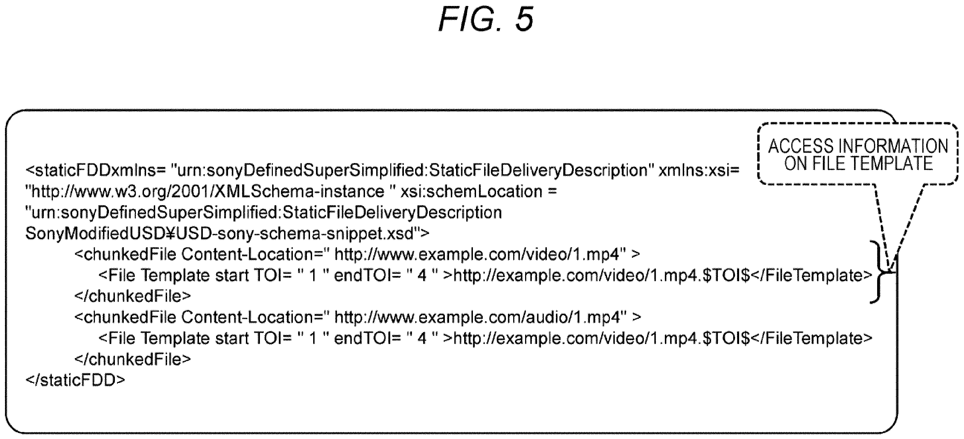

Fig. 5 is an example of file delivery description (FDD).

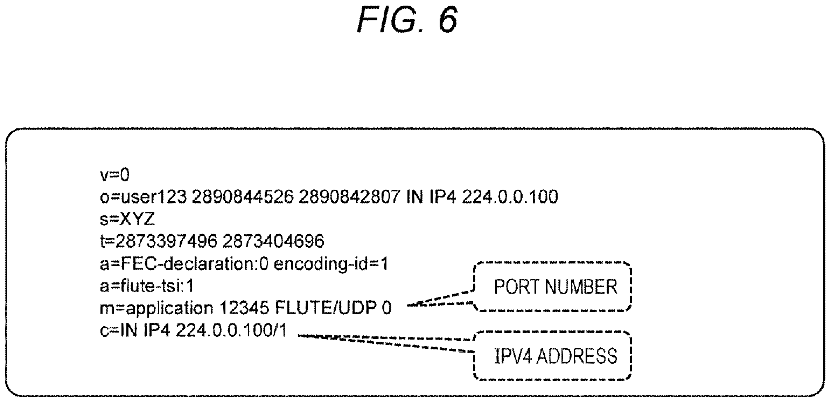

Fig. 6 is an example of session description (SDP).

These metafiles are set per service, for example, per program content.

For example, the following pieces of information as shown in Fig. 4 are recorded in the user service description (USD) shown in Fig. 4.
(a) service ID
(b) access information of broadcast transmitted data
(c) access information of unicast transmitted data
(d) access information of MPD

(a) The service ID is information such as a program title.
(b) The access information of broadcast transmitted data is access information (URL) for acquiring the broadcast delivery data of the program corresponding to the service ID, i.e., the AV segment constituting the program content.
(c) The access information of unicast transmitted data is access information (URL) for acquiring the unicast delivery data of the program corresponding to the service ID, i.e., the AV segment constituting the program content.
(d) The access information of MPD is access information for acquiring media presentation description (MPD) describing guide information and control information corresponding to the service ID.

Note that as described above, MPD is signaling data including a manifest file for describing metadata which is management information for a moving image and an audio file. Specifically, for example, delivery start time information for the program content to be delivered by the broadcasting station, and access information for accessing the AV segment are recorded.

The user service description (USD) shown in Fig. 4 describes these pieces of data as XML data.

Note that the data transmission from the transmitter 20 to the receiver 30 is performed using one or both of broadcast or multicast as point-to-multipoint communication, and unicast as one-on-one communication.

Note that in the following description, the term "broadcast" includes the meaning of "unicast".

The broadcast transmitted data is, for example, transmitted data through a broadcast wave and can be received by a large number of clients.

The unicast transmitted data is, for example, one-on-one transmitted data which is transmitted by HTTP request/response.

InMBMS, the same content can be delivered using multicast and unicast in parallel, and the client can selectively receive one of transmitted data.

The file delivery description (FDD) shown in Fig. 5 records, for example, access information for acquiring a file template necessary for the process of reproducing the AV segment received from the transmitter.

Like the user service description (USD) shown in Fig. 4, the file delivery description (FDD) shown in Fig. 5 is also described as XML data.

Information about a communication session for receiving the AV segment is recorded in the session description (SDP) shown in Fig. 6. For example, information such as a port number and IPV4 address, which are applied to the communication session, is recorded.

Note that the session description (SDP) shown in Fig. 6 is transmitted not as XML data, but as character string data.

Thus, most of the signaling data, for example, the following data:
(1) user service description (USD);
(2) file delivery description (FDD);
(3) repair flow description (RFD); and
(4) media presentation description (MPD)
are described in XML.

The amount of XML format data when the data is encoded is larger than that of so-called binary format data. Accordingly, assuming that XML data describing the entire signaling data including the above-mentioned USD and the like is generated and the coded data is repeatedly transmitted, the processing load on the transmitter increases and a large band is constantly consumed in the communication path.

Thus, the process of transmitting the XML coded data is extremely inefficient compared to a configuration of transmitting coded data in a binary format.

However, in a configuration in which signaling data is transmitted not in an XML format but in a binary format, it is necessary for the receiver (client) to execute a process of transforming data from binary data to XML data.

The receiver (client) 30 does not always have such a data processing function. Even if the receiver has the processing function, the processing load involved in the generation of XML data from binary data occurs. If the time required for the data conversion process increases, the time to start the reception of the AV segment is delayed, which results in a problem that the reproduction start time is delayed.

Note that in a network of 3GPP system, the signaling data which requires the analysis process in the application layer of the receiver (client) tends to be increasingly based on XML in consideration of the requirements, such as readability, mountability, and ease of maintenance.

Accordingly, it can be said that it is against the trend of the times to form the receiver (client) to receive binary data and transform the binary data to XML data.

In particular, in the implementation on the premise of the general-purpose DASH client based on the DASH protocol, the signaling data encoded by XML is indispensable.

To reduce compression of the communication band, compression of the signaling data encoded by XML can be one solution. Specifically, for example, XML compression encode/decode library which enables the process of compressing XML data, can be used. However, there is a problem that a sufficient compression effect cannot be obtained depending on the data configuration, which does not lead to a solution to band compression.

### [3. Regarding an example of a signaling data delivery process using an XML signaling template]

As described above, the following pieces of configuration data of signaling data:
(1) user service description (USD);
(2) file delivery description (FDD);
(3) repair flow description (RFD); and
(4) media presentation description (MPD)
are described by XML.

The signaling data described in these pieces of XML data needs to be repeatedly transmitted from the transmitter, which causes problems such as an increase in the processing load on the transmitter and consumption of the communication band.

An example for solving these problems will be described below.

The example described below is an example in which a process using an XML signaling template is carried out.

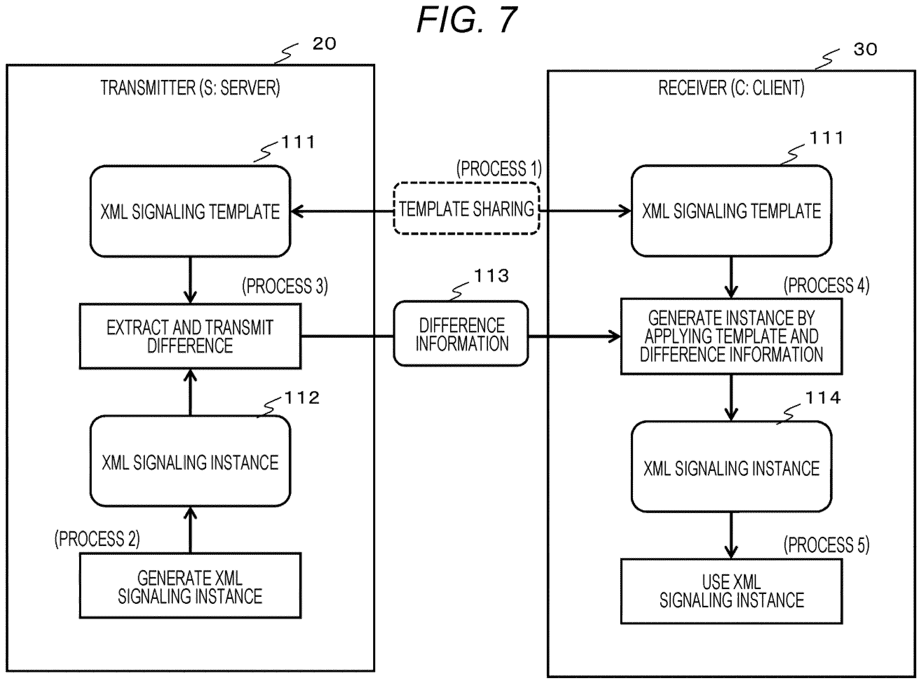

An outline of the example will be described with reference to Fig. 7.

In this example, as shown in Fig. 7, the following processes (Processes 1 to 5) are executed between the transmitter (server) 20 and the receiver (client) 30.
(Process 1) An "XML signaling template 111" which can be continuously used as data that is used in common to a plurality of services, such as a plurality of program contents, is shared between the transmitter (server) 20 and the receiver (client) 30.
(Process 2) The transmitter (server) 20 generates the original XML signaling data (= "XML signaling instance 112") corresponding to each service, such as each program content to be provided to the receiver (client) 30.
(Process 3) The transmitter (server) 20 extracts difference information 113 between "XML signaling template 111" and "XML signaling instance 112" and transmits the difference information 113 to the receiver (client) 30.
(Process 4) The receiver (client) 30 applies the difference information 113 received from the transmitter (server) 20 to the shared "XML signaling template 111" and generates "signaling instance 114" which is actually available signaling data.
(Process 5) The receiver (client) 30 performs a process using the generated "signaling instance 114". Specifically, the receiver analyzes the XML signaling data and executes the process based on the analysis result.

Note that "XML signaling template 111" is, for example, a template provided by the transmitter (server) 20, such as a certain broadcasting station, and is XML data having a setting in which data (guide information, control information, etc.) that can be used in common to various programs (a plurality of services) provided by the broadcasting station is a main component.

The "signaling instances 112 and 114" which are signaling data that can be used by the receiver (client) 30 can be generated by data conversion of the "XML signaling template 111", i.e., addition, modification, or deletion of a partial configuration data.

Specifically, the "signaling instances 112 and 114" are signaling data composed of guide information, control information, and the like which can be actually used for application to the reception and reproduction of the AV segment corresponding to the individual program (service).

The "signaling instances 112 and 114" are generated by executing a process of addition, modification, deletion, or the like using the "difference information 113" on the "XML signaling template 111".

In order for the receiver (client) 30 to receive and reproduce an AV segment corresponding to a specific service from the transmitter (server) 20, the signaling instance unique to the service is required.

This signaling instance can be generated by performing a conversion process in which the difference information unique to the service is applied to the signaling template, that is, a process of addition, modification, deletion, or the like based on the difference information.

Note that the template transformation executed in this case does not involve replacement of the template itself. The XML signaling instance is generated by applying the difference information to the template, and the original XML signaling template is directly held in the storage unit without any modification. After that, the same template is used for generating other instances.

The above-described (Process 1) to (Process 5) will be sequentially described below.

### (Process 1) XML signaling template sharing process

The process 1 is a process for sharing the "XML signaling template 111", which can be continuously used as genera-purpose data, between the transmitter (server) 20 and the receiver (client) 30.

By this sharing process, the same XML signaling template 111 is stored in the transmitter (server) 20 and the storage unit of the receiver (client) 30.

This template sharing process is executed prior to a series of processes from (Process 2) to (Process 5), i.e., from the subsequent (Process 2) of generating the XML signaling instance executed by the transmitter (server) 20, to (Process 5) of executing the XML signaling instance executed by the receiver (client) 30.

As the sharing method, for example, the "XML signaling template 111" is transmitted from the transmitter (server) 20 to the receiver (client) 30 via a network and is shared.

Alternatively, a process may be performed in which the template generated by the transmitter (server) 20 is stored in a storage medium, such as a DVD or a flash memory, as the "XML signaling template 111", and is provided to the receiver (client) 30, and the receiver reads the template from the storage medium and stores the template in the storage unit.

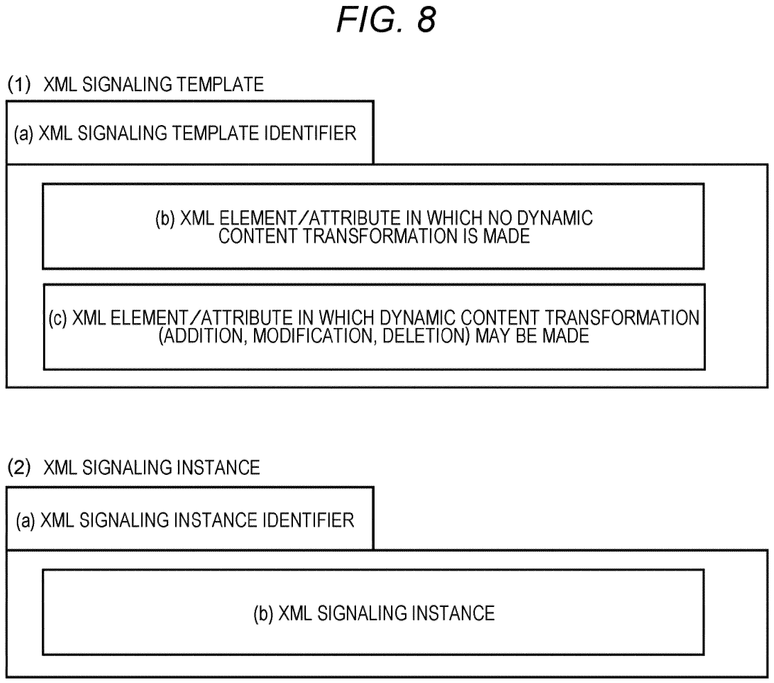

Fig. 8 (1) shows an example of the XML signaling template 111.

The XML signaling template 111 includes the following pieces of data:
(a) an XML signaling template identifier for uniquely identifying the XML signaling template;
(b) an XML element and attribute with no dynamic content transformation; and
(c) an XML element and attribute in which a dynamic content transformation (addition, modification, or deletion) can be made.

The XML signaling template 111 includes the above-mentioned pieces of data.

Note that the XML signaling template identifier is set to include version information.

(b) XML element and attribute with no dynamic content transformation are, for example, data commonly used in the process of receiving and reproducing a plurality of program contents, and are element information and attribute information of XML configuration data common to a plurality of signaling instances corresponding to the plurality of contents.

The data (b) is directly used as configuration data of the XML signaling instance in the XML signaling instance generation process in (Process 5) by the receiver (client) 30 shown in Fig. 7.

(c) XML element and attribute in which a dynamic content transformation (addition, modification, or deletion) can be made are, for example, element information and attribute information of the XML configuration data unique to the signal instance corresponding to a specific content actually used in the receiver (client) 30.

The data (c) represents the element and attribute to be converted using the difference information 113 in the XML signaling instance generation process in (Process 5) by the receiver (client) 30.

Specifically, the receiver (client) 30 performs the process of generating the XML signaling instance 114 on the basis of the XML signaling template 111 in (Process 5). At this time, the receiver (client) 30 applies the difference information 113 transmitted from the transmitter (server) 20 in (Process 2), and converts the "(c) XML element and attribute in which a dynamic content transformation (addition, modification, or deletion) can be made".

By this process, the receiver (client) 30 generates the XML signaling instance 114 which is composed of actually available signaling data.

Note that "content transformation" in " (c) XML element and attribute in which a dynamic content transformation (addition, modification, or deletion) can be made" includes each mode of an addition process, a modification process, and a deletion process. The difference information 113 also includes information indicating one of the addition, modification, and deletion modes in which the data conversion is to be performed, and the receiver (client) 30 applies the difference information 113 to the XML signaling template 111, and converts the XML signaling template 111, thereby generating the XML signaling instance 114 corresponding to the individual content (program).

Note that the "XML signaling template 111" is generated by the transmitter, such as a broadcasting station, but instead maybe generated by the subject of providing the program content (AV segment), such as a device that creates the content, or a device dedicated to generation of XML data.

Accordingly, the transmitter (server) 20, such as a broadcasting station, does not always execute the generation of the "XML signaling template 111".

When the transmitter (server) 20, such as a broadcasting station, generates the "XML signaling template 111", the "XML signaling template 111" generated by the transmitter (server) 20 is provided to the receiver (client) 30 by using a network or a medium.

When the "XML signaling template 111" is generated not by the transmitter (server) 20 but by another device (for example, a template generation server), the "XML signaling template 111" can be provided from the device (template generation server), which has generated the "XML signaling template 111", to the transmitter (server) 20 and the receiver (client) 30 via a network or a storage medium.

Specifically, for example, it is possible to make a setting in which the XML signaling template is shared by the downloading process from the server on the network accessible from both of the transmitter (server) 20 and the receiver (client) 30.

Further, since the content of the "XML signaling template 111" itself is not frequently updated, for example, hard-code which is incorporated in the implementation of the transmitter (server) 20 and the receiver (client) 30 can be set depending on the application.

### (Process 2) XML signaling instance generation process

In the process 2, the transmitter (server) 20 generates the original XML signaling data (= "XML signaling instance 112") to be provided to the receiver (client) 30.

The "signaling instance 112" is signaling data composed of guide information, control information, and the like which can be actually used for application to the reception and reproduction of the AV segment corresponding to the individual program (service).

The transmitter (server) 20 determines the content of notification information (signaling data) corresponding to the content such as a program to be provided to the receiver (client) 30, and generates the XML signaling instance 112 including the determined information.

Note that the XML signaling instance 112 including unique information corresponding to the individual content generated by the transmitter (server) 20 includes the same data as the "signaling instance 114" generated by the receiver (client) 30 executing a process, such as addition, modification, or deletion, using the "difference information 113" on the "XML signaling template 111" in (Process 5).

The receiver (client) 30 generates the "signaling instance 114" by executing a process, such as addition, modification, or deletion, using the "difference information 113" on the "XML signaling template 111".

The signaling instance 114 generated by the receiver (client) 30 in (Process 5) is XML signaling data which can be used in the process of accessing, receiving, and reproducing the AV segment in the receiver (client) 30. Specifically, the signaling instance is signaling data including information required for receiving and reproducing a content such as a specific program.

Fig. 8 (2) shows an example of the XML signaling instance 112 generated by the transmitter (server) 20.

The XML signaling instance 112 includes the following pieces of data.
(a) XML signaling instance identifier for uniquely identifying the XML signaling instance
(b) XML signaling instance

The XML signaling instance 112 includes the above-mentioned pieces of data.

(a) The XML signaling instance identifier is an identifier that enables the XML signaling instance to be uniquely identified. The XML signaling instance identifier is set to include version information.

Note that (b) the XML signaling instance is, for example, XML data corresponding to a specific program content, and is XML data including guide information and control information referred to by the receiver (client) 30 in the process of receiving, decoding, and reproducing the AV segment of a specific content.

### (Process 3) Difference extracting and transmitting process

The process 3 is a process in which the transmitter (server) 20 extracts the difference information 113 between the "XML signaling template 111" and the "XML signaling instance 112", and transmits the difference information to the receiver (client) 30.

The transmitter (server) 20 extracts the difference between the XML signaling instance 112 generated in (Process 2) and the XML signaling template 111 generated in (Process 1).

The difference includes a content to be dynamically converted according to the content corresponding to the signaling instance.

Note that there are various methods for describing the difference information 113. For example, the difference information can be described by applying XML transformation language such as XML stylesheet language transformation (XSLT).

The transmitter (server) 20 transmits the generated difference information 113 to the receiver (client) 30.

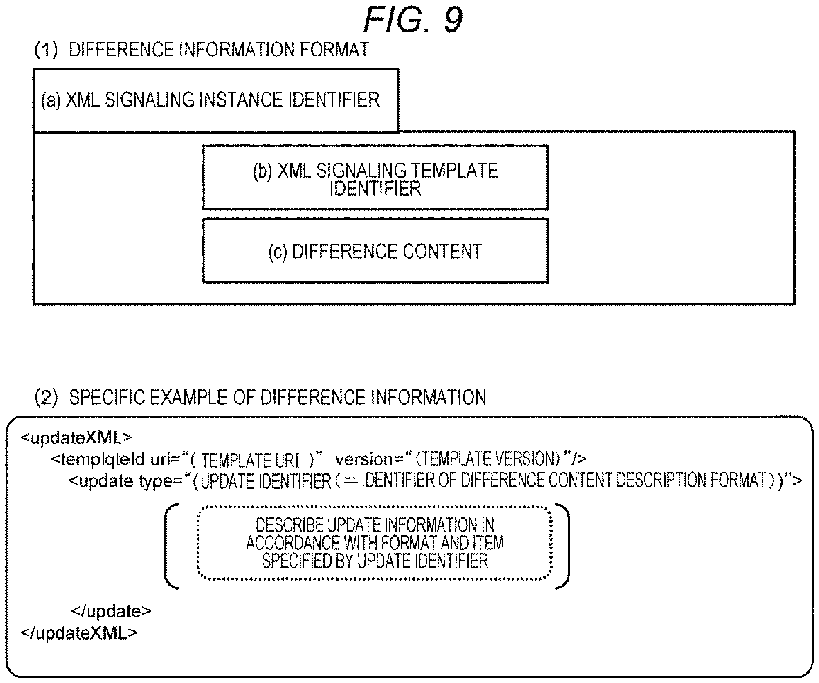

As shown in Fig. 9(1), the difference information 113 is composed of the following information:
(a) an XML signaling instance identifier which is the identifier of the XML signaling instance 112 from which the difference is extracted;
(b) an identifier of an XML signaling template 111 to which the difference information is applied in the receiver (client) 30; and
(c) a difference content (application mode information of the difference, and application data)

The difference information includes these pieces of data.

Fig. 9(2) shows a specific example of difference information. As shown in Fig. 9(2), for example, the difference information is described as follow.

```
 <updateXML>
       <templateId url = "(template URI) "version =" (template
       version)"/>
       <update type = "(identifier of difference content
       description format)" >
       (difference content description based on the format
       designated by the value of update/@type)
       </update>
       </updateXML>
```

The receiver (client) 30 executes a process, such as addition, modification, or deletion, using the above-described "difference information 113" on the "XML signaling template 111", thereby making it possible to generate the "signaling instance 114".

### (Process 4) Generation of a signal instance by applying difference information

The process 4 is a process in which the receiver (client) 30 applies the difference information 113 received from the transmitter (server) 20 to the shared "XML signaling template 111" and generates the "signaling instance 114" which is signaling data that can be actually used.

The receiver (client) 30 which has received the difference information 113 from the transmitter (server) 20 generates the XML signaling instance 114 by applying the difference content included in the difference information 113 to the XML signaling template 111 shared in (Process 1) on the basis of the content of the difference information 113. The XML signaling instance 114 generated in this case is the same as the XML signaling instance 112 generated by the transmitter (server) 20 in (Process 2).

Note that the receiver (client) 30 selects the XML signaling template having the identifier that matches the identifier of the XML signaling template recorded in the difference information 113, and executes the transformation (addition, modification, or deletion) based on the difference content recorded in the difference information 113.

Note that the template transformation executed in this case does not involve replacement of the template itself. The XML signaling instance is generated by applying the difference information to the template, and the original XML signaling template is directly held in the storage unit without any modification.

After that, the same template is used for generating other instances.

The receiver (client) 30 sets the XML signaling instance identifier recorded in the difference information 113 to the XML signaling instance 114 generated by this process.

### (Process 5) XML signaling instance applying process

The process 5 is a process in which the receiver (client) 30 uses the generated "signaling instance 114". Specifically, the XML signaling data is analyzed and a process based on the analysis result is executed.

The "signaling instance 114" generated by the receiver (client) 30 includes access information, control information, and the like required for performing the process of receiving, decoding, and reproducing the AV segment corresponding to a specific service, such as a specific program content, which is specified by the identifier of the XML signaling instance.

The receiver (client) 30 can accurately receive and reproduce the content corresponding to the instance with reference to the generated signaling instance 114.

### [4. Regarding a specific example of XML data]

Next, specific examples of the following pieces of information to be applied in a series of processes described with reference to Figs. 7 to 9 will be described.
(1) XML signaling template
(2) difference information
(3) XML signaling instance

Note that specific examples described below are examples in which the media presentation description (MPD) which is one component of XML signaling data is set as the following three pieces of data:
XML signaling template;
difference information; and
XML signaling instance.

The media presentation description (MPD) is signaling data including a manifest file describing management information of a moving image or audio file which is configuration data of the AV segment transmitted from the transmitter (server) 20 to the receiver (client) 30.

In DASH streaming, MPD is an indispensable signaling instance. 3GPP-(e) MBMS specifies that an identifier (+version) is given and transmitted when the XML signaling instance is transmitted from the transmitter (server) 20 to the receiver (client) 30.

This is intended to manage the identification, delivery, and update of the XML signaling instance, and "metadataEnvelope" is specified as a delivery format for the XML signaling instance.

Specific examples described below are examples in which the following pieces of data are transmitted in accordance with "metadataEnvelope" specified as the delivery format of the XML signaling instance.
(1) XML signaling template
(2) difference information
(3) XML signaling instance

Note that the following example of the MPD is an example in which an extremely simple, minimum content is described.

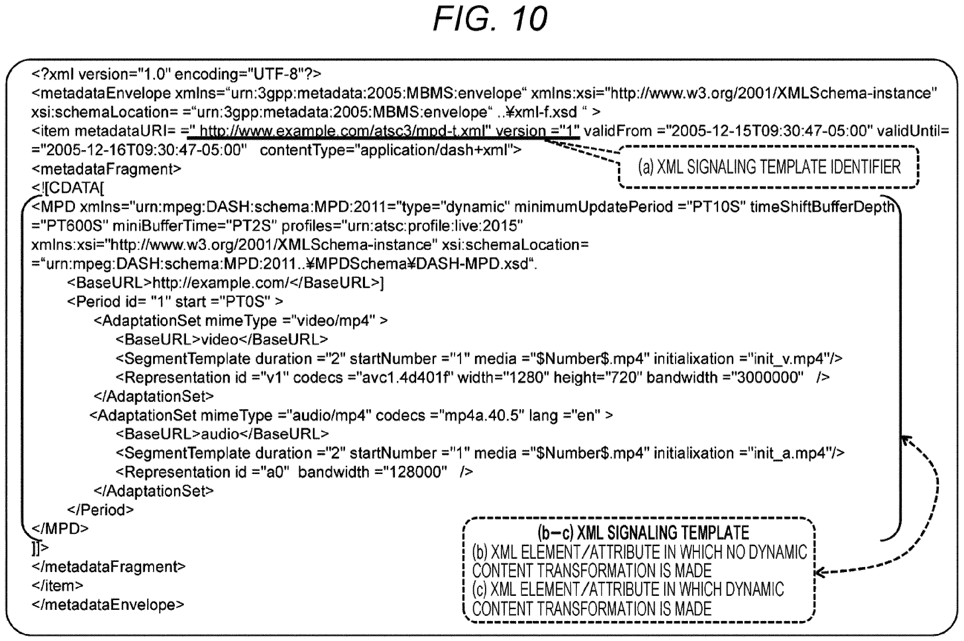

Fig. 10 is a diagram showing an example of the XML signaling template for MPD.

The XML signaling template is a template which is provided by the transmitter (server) 20, such as a certain broadcasting station, and is XML data having a setting in which data (guide information, control information, etc.) that can be used in common to various programs (a plurality of services) provided by the broadcasting station is a main component.

As described above with reference to Fig. 8(1), the XML signaling template includes the following pieces of data:
(a) an XML signaling template identifier for uniquely identifying the XML signaling template;
(b) an XML element and attribute with no dynamic content transformation; and
(c) an XML element and attribute in which a dynamic content transformation (addition, modification, or deletion) can be made.

The specific example shown in Fig. 10 also includes the above-mentioned pieces of data (a) to (c).

The XML signaling template identifier is referred to by the receiver (client) 30 when the XML signaling instance to which the difference information is applied is generated. Specifically, the XML signaling template identifier is referred to in the case of selecting the XML signaling template having the same identifier as the XML signaling template identifier set in the difference information.

The example of XML data shown in Fig. 10 shows a setting in which the (b to c) XML signaling instances include data of the following two categories:
(b) an XML element and attribute with no dynamic content transformation; and
(c) an XML element and attribute in which a dynamic content transformation (addition, modification, or deletion) can be made.

When the receiver (client) 30 generates the XML signaling instance by applying the difference information,
the data of " (b) an XML element and attribute with no dynamic content transformation" is set as the configuration data of the XML signaling instance without any modification; and
the data of "(c) an XML element and attribute in which a dynamic content transformation (addition, modification, or deletion) can be made" is transformed by applying the data of difference information which is separately received from the transmitter (server) 20.

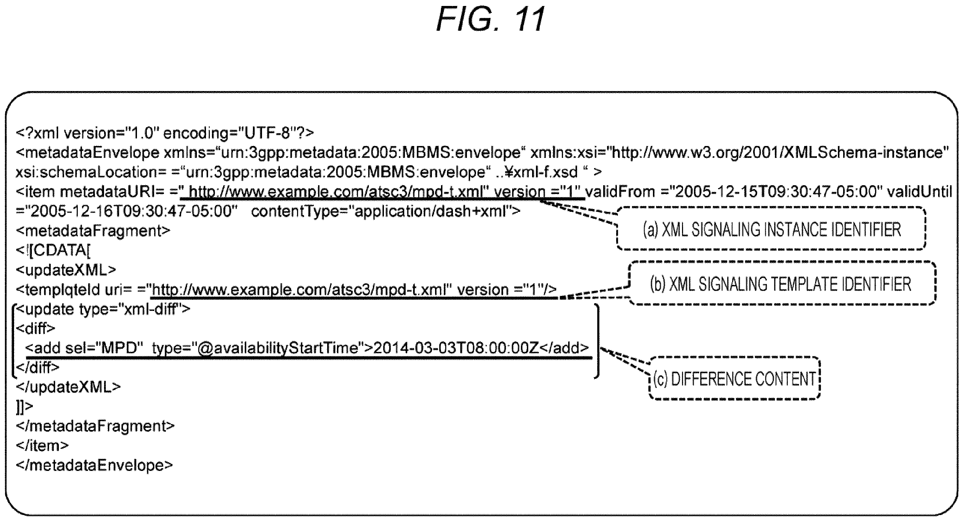

Fig. 11 shows a specific example of the difference information to be applied to the XML signaling template for MPD shown in Fig. 10.

As described above with reference to Fig. 9, the difference information is composed of the following pieces of information:
(a) an XML signaling instance identifier which is an identifier of the XML signaling instance from which the difference is extracted;
(b) an identifier of the XML signaling template to which the difference information is applied in the receiver (client) 30; and
(c) a difference content (application mode information and application data)

The difference information includes these pieces of data.

The specific example shown in Fig. 11 also includes these pieces of data (a) to (c).

Note that (b) the XML signaling template identifier is the same identifier as (a) the XML signaling template identifier recorded in the XML signaling template shown in Fig. 10.

On the basis of this identifier, the receiver (client) 30 can determine that the template to which the difference information shown in Fig. 11 is applied is identical with the template shown in Fig. 10.

The identifier of the XML signaling instance generated by applying the difference information shown in Fig. 11 to the XML signaling template shown in Fig. 10 is (a) the XML signaling instance identifier recorded in the difference information shown in Fig. 11.

In (c) the difference content, application mode information, which indicates a transformation mode for the XML signaling template, i.e., indicates which one of data addition, data transformation, and data deletion is performed on the XML signaling template, and application data corresponding to the transformed content are recorded.

In the example shown in Fig. 11, the recorded data of "add sel "MPD" type = "@availabilityStartTime"" indicates a process of adding an element "availabilityStartTime" to the MPD template.

The content (attribute) of additional data is "2014-03-03T08:00:00Z".

Specifically, these descriptions specify the process of adding the item "availabilityStartTime=2014-03-03T08:00:00Z" to the XML signaling template for MPD.

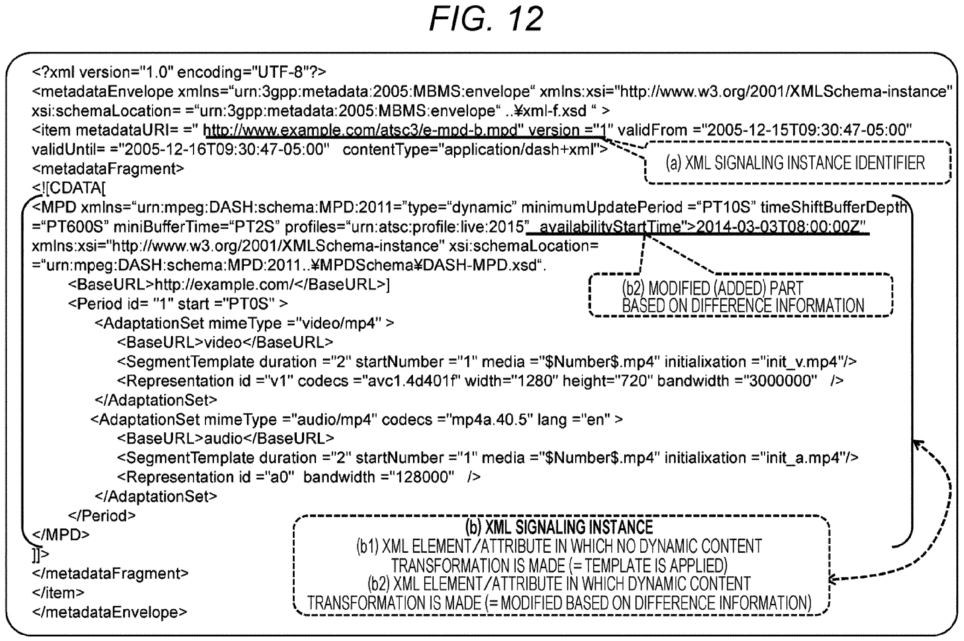

Fig. 12 shows a specific example of the XML signaling instance generated by applying the difference information shown in Fig. 11 to the XML signaling template for MPD shown in Fig. 10.

As described above with reference to Fig. 8(2), the XML signaling instance includes the following pieces of data:
(a) an XML signaling instance identifier for uniquely identifying the XML signaling instance; and
(b) an XML signaling instance

In the XML signaling instance which is generated by the receiver (client) 30 applying the difference information shown in Fig. 11 to the XML signaling template for MPD shown in Fig. 10, the XML signaling instance identifier recorded in the difference information shown in Fig. 11 is set.

Note that this XML signaling instance identifier matches the identifier of the XML signaling instance generated by the transmitter (server) 20 in (Process 2) shown in Fig. 7.

(b) The XML signaling instance shown in Fig. 12 is composed of data of the following two categories:
(b1) an XML element/attribute with no dynamic content transformation; and
(b2) an XML element/attribute with a dynamic content transformation.

(b1) The XML element/attribute with no dynamic content transformation is a part of the data configured using the data of the XML signaling template shown in Fig. 10 without any modification.

On the other hand, (b2) the XML element/attribute with a dynamic content transformation is a part of the data on which transformation (addition, modification, or deletion) is made by applying the difference information shown in Fig. 11 to the XML signaling template shown in Fig. 10.

As described above, the difference information shown in Fig. 11 is difference information requiring data addition. "availabilityStartTime=2014-03-03T08:00:00Z"

The difference information shown in Fig. 11 specifies a process of adding the above-mentioned item.

Accordingly, the configuration data of (b) the XML signaling instance shown in Fig. 12 has a setting in which the data "availabilityStartTime=2014-03-03T08:00:00Z", which is recorded in the difference information shown in Fig. 11, is added to the XML signaling template shown in Fig. 10.

By such a data transformation process based on the difference information, the XML signaling instance is generated.

The receiver (client) 30 can accurately receive, decode, and reproduce the AV segment corresponding to a specific content with reference to the XML signaling instance generated as described above.

### [5. Regarding an example of a communication process executed by the transmitter and the receiver]

Next, an example of the communication process executed by the transmitter and the receiver will be described.

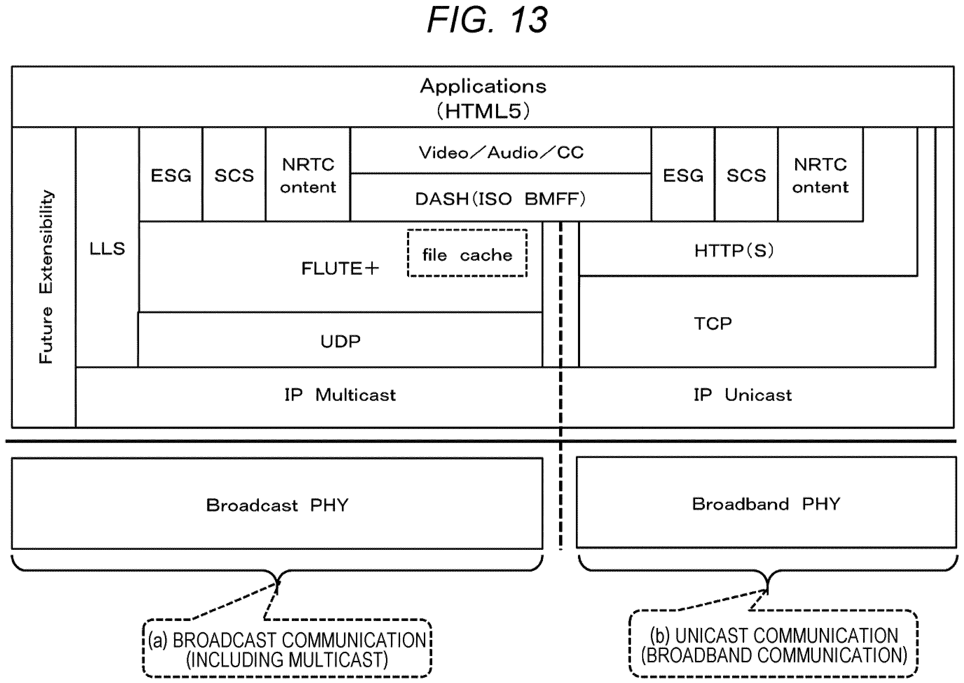

Fig. 13 is a diagram showing an example of protocol stacks of the transmitter and the receiver.

The example shown in Fig. 13 shows a setting including two protocol stacks for performing a process for the following two pieces of communication data:
(a) broadcast (including multicast) communication (for example, broadcast data delivery);
(b) unicast (broadband) communication (for example, HTTP P2P communication)

The left part of Fig. 13 indicates the protocol stack corresponding to (a) broadcast communication (for example, broadcast data delivery).

The right part of Fig. 13 indicates the protocol stack corresponding to (b) unicast (broadband) communication (for example, HTTP P2P communication).

The protocol stack corresponding to (a) broadcast communication (for example, broadcast data delivery) shown in the left part of Fig. 13 has the following layers from the lowest layer.
(1) Broadcast physical layer (Broadcast PHY)
(2) IP Multicast layer (IP Multicast)
(3) UDP layer
(4) FLUTE+ layer
(5) ESG, SCS, NRTcontent, DASH (ISO BMFF) and Video/Audio/CC
(6) application layer (Applications (HTML 5))

Note that an LLS layer coexists as an upper layer of (2) IP Multicast layer (IP Multicast).

Further, a use allowable layer (Future Extensibility) of a future new protocol is set as an upper layer of (1) the broadcast physical layer (Broadcast PHY).

(1) Broadcast physical layer (Broadcast PHY) is a physical layer composed of, for example, a communication control unit that controls a communication unit of a broadcast system for executing broadcast communication.
(2) IP Multicast layer (IP Multicast) is a layer for executing a data transmission/reception process compliant with IP Multicast.
(3) UDP layer is a UDP packet generation/analysis process layer.
(4) FLUTE+ layer is a layer for storing or exchanging transfer data in accordance with an expanded FLUTE protocol.
   The file delivery over uni-directional transport (FLUTE) protocol is originally specified as a file transfer protocol in multicast. FLUTE is a multicast protocol of FDT and a scalable file object called ALC, and specifically, is composed of a combination of LCT and FEC components as the building blocks.
   The conventional FLUTE was developed to be used mainly for asynchronous file transfer. However, at present, in 3GPP, expansion for facilitating application for broadcast live streaming is performed. This expansion specification is called FLUTE+.
(5) ESG, SCS, NRTcontent, DASH (ISO BMFF), and Video/Audio/CC are data transferred in accordance with FLUTE+ protocol.

As described above, the broadcast delivery service compliant with the DASH standard is called multimedia broadcast multicast service (MBMS). As a system for efficiently implementing the MBMS in LTE, evolved multimedia broadcast multicast service (eMBMS) is known.

MBMS and eMBMS are broadcast delivery services for delivering the same data, for example, a movie content, to a plurality of user terminals (UEs) located in a specific area by a common bearer. By broadcast delivery compliant with MBMS or eMBMS, the same content can be simultaneously provided to a large number of receivers, such as smartphones, PCs, or televisions, which are located in a delivery service providing area.

MBMS and eMBMS specify a process of downloading a file compliant with a 3GPP file format (ISO-BMFF file, MP4 file) in accordance with a transfer protocol: file delivery over uni-directional transport (FLUTE).

Many of the following two items of data described above with reference to Fig. 2, that is,
(a) signaling data 50
(b) AV segment 60
are transmitted in accordance with the FLUTE protocol or the FLUTE+ protocol.

A combination of the FLUTE protocol and the FLUTE+ protocol is hereinafter referred to as "FLUTE(+)".

FLUTE (+) indicates that both of the FLUTE protocol and the FLUTE+ protocol can be used.

In the data transferred in accordance with the FLUTE (+) protocol, (5) ESG, SCS, NRTcontent, DASH (ISO BMFF), and Video/Audio/CC are data transferred in accordance with the FLUTE(+) protocol.

ESG represents electronic service guide and is, for example, guide information such as program table.

SCS represents service channel signaling and includes guide information and control information corresponding to the content provided to the user.

These ESG and SCS are components of the above-mentioned signaling data.

Specifically, a process using the XML signaling template, the XML signaling template, and the difference information is applied.

NRTcontent represents a non-real-time content.

Video/Audio/CC represents actual data to be reproduced, such as a video or audio, which is delivered in accordance with the DASH standard.

(6) The application layer (Applications (HTML 5)) is an application layer for executing the generation or analysis of data to be transferred in accordance with the FLUTE(+) protocol, and performs, for example, generation or analysis of data to which the HTML 5 is applied.

The application layer is a layer for executing, for example, the process of generating the above-mentioned XML signaling template, XML signaling template, and difference information.

Note that LLS represents low layer signaling (LLS) transmission/reception layer as signaling data. LLS is a layer for transmitting and receiving LLS signaling data including communication setting information, address information, and the like to be applied to the data reception in the receiver (client).

Data to be transmitted to the receiver (client) by applying the LLS layer is a component of the signaling data, and a process using the above-mentioned XML signaling template, XML signaling instance, and difference information can be applied to the data.

Note that examples of the signaling data to which the process using the above-mentioned XML signaling template, XML signaling instance, and difference information is applied include the following three pieces of data.
(a) ESG;
(b) SCS; and
(c) LLS.

ESG represents electronic service guide and is, for example, guide information such as a program table.

SCS represents service channel signaling and includes guide information and control information corresponding to the content provided to the user.

LLS represents low layer signaling and is composed of communication setting information, address information, or the like to be applied to the data reception in the receiver (client).

On the other hand, the protocol stack corresponding to (b) unicast (broadband) communication (for example, HTTP P2P communication) shown in the right part of Fig. 13 has the following layers from the lowest layer:
(1) broadband physical layer (Broaband PHY);
(2) IP unicast layer (IP Unicast);
(3) TCP layer;
(4) HTTP layer;
(5) ESG, SCS, NRTcontent, DASH (ISO BMFF), and Video/Audio/CC; and
(6) application layer (Applications (HTML 5)).

(1) The broadbandphysical layer (Broaband PHY) is a physical layer composed of a communication control unit, such as a device driver, which controls a communication unit, such as a network card, for executing broadband communication.
(2) The IP unicast layer (IP Unicast) is a layer for executing an IP unicast transmission/reception process.
(3) The HTTP layer is an HTTP packet generation/analysis process layer.

This upper layer has a configuration similar to the configuration of the stack of (a) broadcast communication (for example, broadcast data delivery) shown in the left part of Fig. 13.

Note that each of the transmitter (server) 20 and the receiver (client) 30 may be a device that performs a process compliant with two processing systems shown in Fig. 13, that is, the following two communication protocol stacks:
(a) broadcast communication (for example, broadcast data delivery); and
(b) unicast (broadband) communication (for example, HTTP P2P communication). Alternatively, each of the transmitter and receiver may be a device that performs only one of the processes of the communication systems.

### [6. Regarding a process sequence executed by the transmitter and the receiver]

Next, an example of the process sequence executed by the transmitter and the receiver will be described.

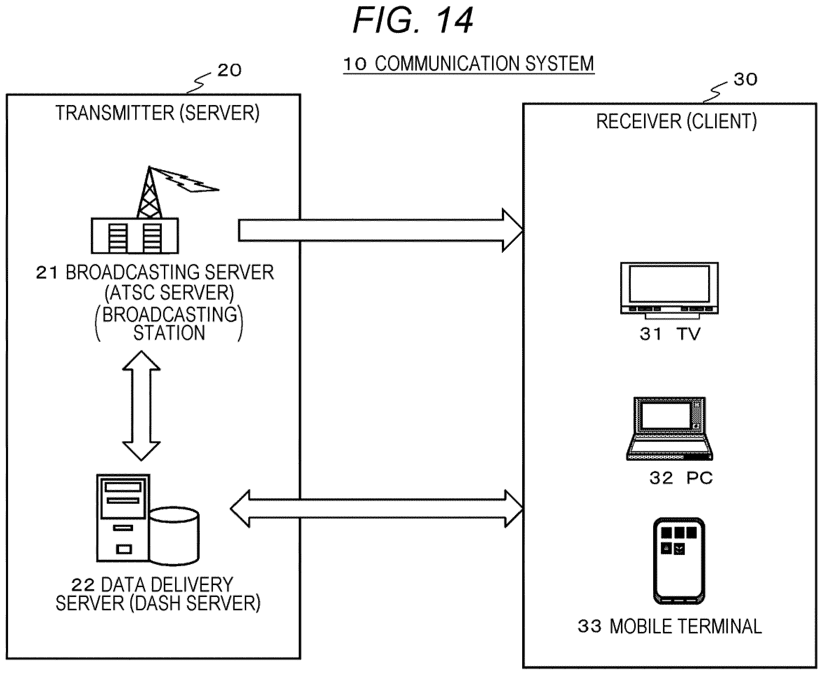

Note that, hereinafter, it is assumed that, as shown in Fig. 14, the transmitter (server) 20 is composed of the following two components:
the broadcasting server (ATSC server) 21; and
the data delivery server (DASH server) 22.

On the other hand, the receiver (client) 30 is composed of a TV 31, a PC 32, a mobile terminal 33, or the like.

A server/client system composed of a broadcast DASH streaming stack using FLUTE(+) and DASH ISO-BMFF is called an ATSC (Advanced Television System Committe) system.

The ATSC system is a standard regarding the transmission/reception of a digital television, and the broadcasting server (ATSC server) 21 is a server that executes broadcast or multicast delivery of a content compliant with the ATSC standard.

This broadcasting server (ATSC server) 21 performs a process compliant with the protocol stack for (a) broadcast communication shown in the left part of Fig. 13.

Further, the data delivery server (DASH) 22 executes unicast delivery (P2P communication) and executes content delivery for each client.

The data delivery server (DASH) 22 performs a process compliant with the protocol stack for (b) unicast (broadband) communication shown in the right part of Fig. 13.

The receiver (client) 30 is composed of the TV 31, the PC 32, the mobile terminal 33, or the like and has a function for executing a process compliant with at least one of the protocol stacks of a process compliant with the protocol stack for (a) broadcast communication shown in the left part of Fig. 13, or a process compliant with the protocol stack for (b) unicast (broadband) communication shown in the right part of Fig. 13.

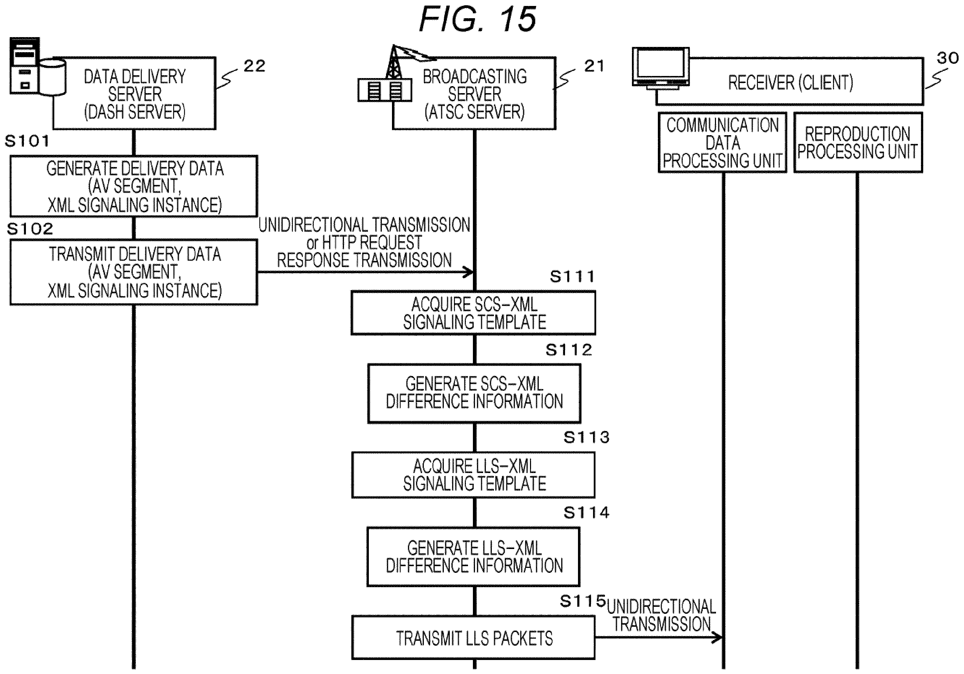

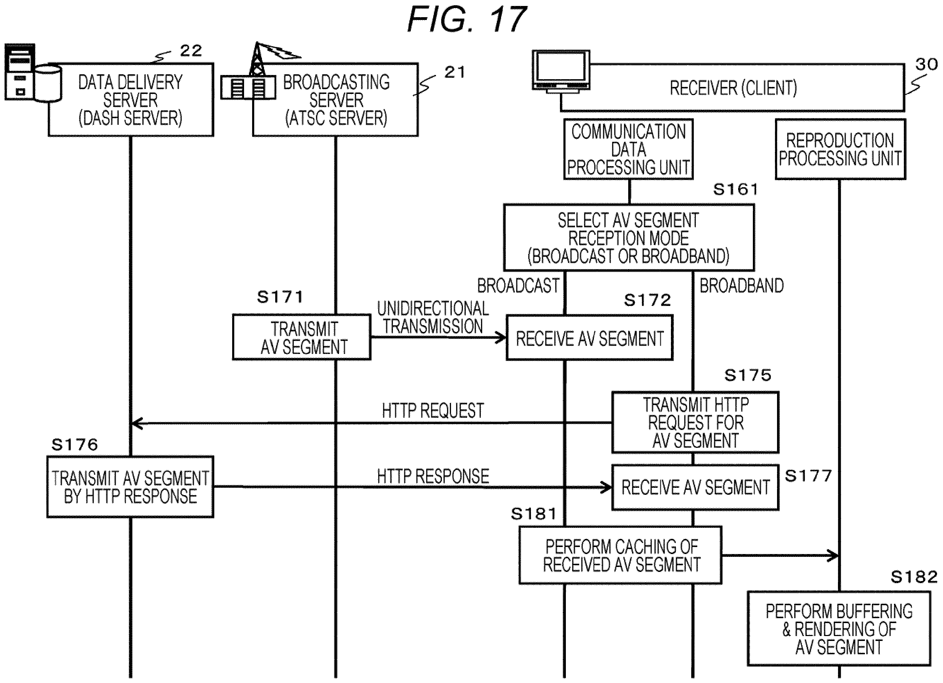

Referring to Figs. 15 to 17, a communication process sequence to be executed by:
the broadcasting server (ATSC server) 21;
the data delivery server (DASH server) 22; and
the receiver (client) 30
will be described.

Note that it is assumed that the process of sharing the XML signaling template between the broadcasting server (ATSC server) 21 and the client (receiver) 30 is already completed.

Specifically, the broadcasting server (ATSC server) 21 and the client (receiver) 30 store the same XML signaling template in their respective storage units.

Note that in the protocol stack described above with reference to Fig. 13, the following three data examples have been described as components of the signaling data:
(a) ESG;
(b) SCS; and
(c) LLS.

ESG represents electronic service guide and is, for example, guide information such as a program table.

SCS represents service channel signaling and includes guide information and control information corresponding to the content provided to the user.

LLS represents low layer signaling and is composed of communication setting information, address information, or the like to be applied to the data reception in the receiver (client).

Each of the ESG, SCS, and LLS is data constituting the signaling data storing available access information, control information, and the like when the acquisition, reproduction, or the like of the content is performed in the receiver (client) . These are generated as XML data.

In the communication processing examples shown in Figs . 15 to 17, examples of the process of generating the XML signaling instance using the difference information for SCS and LLS will be described.

In the communication processing examples shown in Figs . 15 to 17, the roles of the broadcasting server (ATSC server) 21 and the data delivery server (DASH server) 22 are set as follows.

The data delivery server (DASH server) 22 executes the MPD generation process, and provides the broadcasting server (ATSC server) 21 with the generated MPD.

The broadcasting server (ATSC server) 21 generates the difference information compatible with SCS and LLS on the basis of the MPD, and transmits the difference information to the receiver (client) 30.

The receiver (client) 30 generates the XML signaling instance compatible with SCS on the basis of the difference information of SCS received from the broadcasting server (ATSC server) 21. Further, the receiver (client) 30 generates the XML signaling instance compatible with LLS on the basis of the difference information of LLS received from the broadcasting server (ATSC server) 21.

The receiver (client) 30 receives and reproduces the AV segment as a content with reference to these instances.

Note that in the sequence diagrams shown in Figs. 15 to 17, the receiver (client) 30 is separated into a communication data processing unit and a reproduction processing unit, and the processes executed in the respective processing units are separately described.

Each step of the process of step S101 and subsequent steps shown in Fig. 15 will be sequentially described.

### (Step S101)

In step S101, the data delivery server (DASH server) 22 generates delivery data. The delivery data include the following two types of delivery data:
(a) AV segment; and
(b) XML signaling instance.

Note that, in this example, the XML signaling instance is XML data and includes various pieces of signaling data described above with reference to Fig. 3. For example, the XML signaling instance includes XML data (XML signaling instance) constituting SCS and LLS.

### (Step S102)

In step S102, the data delivery server (DASH server) 22 transmits, to the broadcasting server (ATSC server) 21, the delivery data generated in step S101, i.e., the following pieces of data:
(a) AV segment; and
(b) XML signaling instance (only MPD).

The transmission process is executed in accordance with a uni-directional transmission format or an HTTP request response transmission format.

### (Step S111)

In step S111, the broadcasting server (ATSC server) 21 acquires an SCS-XML signaling template from the storage unit.

Note that the SCS-compatible XML signaling template is shared in advance between the broadcasting server (ATSC server) 21 and the client (receiver) 30.

Specifically, the broadcasting server and the client store the same XML signaling template in their respective storage units.

### (Step S112)

In step S112, the broadcasting server (ATSC server) 21 compares the SCS-XML signaling template, which is acquired from the storage unit, with the SCS configuration data in each of the XML signaling instance (MPD) received from the data delivery server (DASH server) 22 and the XML signaling instance (SCS other than MPD) generated in 21, and analyzes the difference therebetween.

SCS-XML difference information is generated on the basis of the difference obtained as a result of the analysis.

Note that, as described above with reference to Fig. 9 and the like, the difference information is composed of the following pieces of information:
(a) an XML signaling instance identifier which is an identifier of the XML signaling instance applied to the difference extraction;
(b) an identifier of the XML signaling template applied to the difference extraction; and
(c) a difference content.

The difference information includes these pieces of data.

### (Step S113)

Next, in step S113, the broadcasting server (ATSC server) 21 acquires an LLS-XML signaling template from the storage unit.

Note that the LLS-compliant XML signaling template is also shared in advance between the broadcasting server (ATSC server) 21 and the client (receiver) 30.

Specifically, the broadcasting server and the client store the same XML signaling template in their respective storage units.

### (Step S114)

In step S114, the broadcasting server (ATSC server) 21 compares the LLS-XML signaling template, which is acquired from the storage unit, with the LLS configuration data in the XML signaling instance generated in the broadcasting server (ATSC server) 21, and analyzes the difference therebetween.

LLS-XML difference information is generated on the basis of the difference as a result of the analysis.

Note that, as described above with reference to Fig. 9 and the like, the difference information is composed of the following pieces of information:
(a) an XML signaling instance identifier which is an identifier of the XML signaling instance applied to the difference extraction;
(b) an identifier of the XML signaling template applied to the difference extraction; and
(c) a difference content.

The difference information includes these pieces of data.

### (Step S115)

Next, in step S115, the broadcasting server (ATSC server) 21 generates the LLS packet storing the LLS-XML difference information, which is generated in step S114, and transmits the LLS packet to the receiver (client) 30.

Note that the process of transmitting the difference information is, for example, repeated uni-directional transmission through a broadcast wave.

This is for the purpose of providing a setting for allowing clients who start the content reception at various timings to receive contents at any time with less waiting time .

### (Step S121)

Theprocess of step S121 and subsequent steps are executed in the receiver (client) 30.

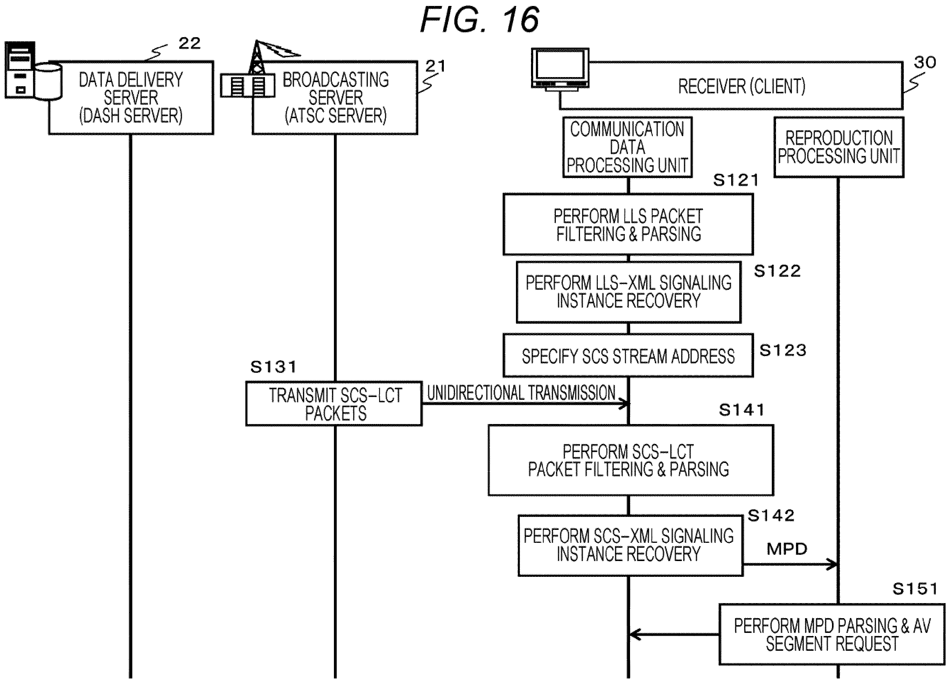

Note that as shown in Fig. 16, the receiver (client) 30 is separated into a communication data processing unit and a reproduction processing unit, and the processes executed in the respective processing units are separately described.

The communication data processing unit of the receiver (client) 30 executes the process of steps S121 to S123 and the process of steps S141 to S142.

In step S121, the receiver (client) 30 receives, from the broadcasting server (ATSC server) 21, the LLS packet storing the LLS-XML difference information, and performs packet filtering and parsing. Specifically, only the packet storing the LLS-XML difference information is selected from the received packet to extract the packet storing data, and the LLS-XML difference information is reconstructed.

### (Step S122)

Next, the receiver (client) 30 generates the LLS-compliant XML signaling instance by applying the LLS-XML difference information received from the broadcasting server (ATSC server) 21 and the LLS-compliant XML signaling template shared in the sharing process executed in advance.

The LLS-compliant XML signaling template is shared in advance between the broadcasting server (ATSC server) 21 and the client (receiver) 30.

Specifically, the broadcasting server and the client store the same XML signaling template in their respective storage units.

The receiver (client) 30 executes, on the LLS-compliant XML signaling template acquired from the storage unit, a transformation process based on the information recorded in the LLS-XML difference information received from the broadcasting server (ATSC server) 21, and generates the LLS-compliant XML signaling instance.

Note that, as described above with reference to Fig. 9 and the like, the difference information is composed of the following pieces of information:
(a) an XML signaling instance identifier which is an identifier of the XML signaling instance applied to the difference extraction;
(b) an identifier of the XML signaling template applied to the difference extraction; and
(c) a difference content.

The difference information includes these pieces of data.

The receiver (client) 30 acquires, from the storage unit, the XML signaling template having the same identifier as the XML signaling template identifier recorded in the LLS-XML difference information received from the broadcasting server (ATSC server) 21, and applies the difference information for the template according to the difference content included in the difference information to the acquired XML signaling template.

Note that the "difference content" recorded in the difference information includes a difference mode (addition, modification, or deletion), difference data, and the like, and the receiver (client) 30 transforms the template according to this record, and generates the LLS-compliant XML signaling instance.

### (Step S123)

Next, the receiver (client) 30 specifies the address of the SCS stream with reference to the LLS-compliant XML signaling instance generated in step S122.

The LLS-compliant XML signaling instance records the access information (stream address) for acquiring the SCS-compatible signaling data. The receiver (client) 30 acquires the access information (stream address) for acquiring the SCS-compatible signaling data from the LLS-compliant XML signaling instance.

### (Step S131)

Step S131 is a process to be executed by the broadcasting server (ATSC server) 21. In step S131, the broadcasting server (ATSC server) 21 generates the SCS-LCT packet storing the SCS-XML difference information generated in step S112, and transmits the SCS-LCT packet to the receiver (client) 30.

Note that the difference information transmission process is, for example, repeated uni-directional transmission through a broadcast wave.

This is for the purpose of providing a setting for allowing clients who start the content reception at various timings to receive contents at any time with less waiting time .

### (Step S141)

Next, the receiver (client) 30 receives, from the broadcasting server (ATSC server) 21, the LCT packet storing the SCS-XML difference information, and performs packet filtering and parsing. Specifically, only the packet storing the SCS-XML difference information is selected from the received packet to extract the packet storing data, and the SCS-XML difference information is reconstructed.

### (Step S142)

Next, the receiver (client) 30 generates the SCS-compatible XML signaling instance by applying the SCS-XML difference information received from the broadcasting server (ATSC server) 21 and the SCS-compatible XML signaling template shared in the sharing process executed in advance.

The SCS-compatible XML signaling template is shared in advance among the broadcasting server (ATSC server) 21, the data delivery server (DASH server) 22, and the client (receiver) 30.

Specifically, the broadcasting server 21, the data delivery server 22, and the client 30 store the same XML signaling template in their respective storage units.

The receiver (client) 30 executes, on the SCS-compatible XML signaling template acquired from the storage unit, a transformation process based on the information recorded in the SCS-XML difference information received from the broadcasting server (ATSC server) 21, and generates the SCS-compatible XML signaling instance.

Note that, as described above with reference to Fig. 9 and the like, the difference information is composed of the following pieces of information:
(a) an XML signaling instance identifier which is an identifier of the XML signaling instance applied to the difference extraction;
(b) an identifier of the XML signaling template applied to the difference extraction; and
(c) a difference content.

The difference information includes these pieces of data.

The receiver (client) 30 acquires, from the storage unit, the XML signaling template having the same identifier as the XML signaling template identifier recorded in the SCS-XML difference information received from the broadcasting server (ATSC server) 21, and performs template transformation on the acquired XML signaling template according to the difference content included in the difference information.

Note that the template transformation executed in this case does not involve replacement of the template itself. The XML signaling instance is generated by applying the difference information to the template, and the original XML signaling template is directly held in the storage unit without any modification.

After that, the same template is used for generating other instances.

Note that the "difference content" recorded in the difference information includes a difference mode (addition, modification, or deletion), difference data, and the like, and the receiver (client) 30 transforms the template according to this record, and generates the SCS-compatible XML signaling instance.

Further, the communication data processing unit of the receiver (client) 30 outputs, to the reproduction processing unit, the MPD-XML signaling instance included in the generated SCS-compatible XML signaling instance.

### (Step S151)

The reproduction processing unit of the receiver (client) 30 executes analysis of the MPD-XML signaling instance received from the communication data processing unit, and outputs, to the communication data processing unit, a request for the AV segment by applying the access information recorded in the MPD-XML signaling instance.

### (Step S161)

Next, the communication data processing unit of the receiver (client) 30 determines the reception mode of the AV segment. Specifically, the communication data processing unit determines which one of the AV segment delivered by broadcast delivery through a broadcast wave or the like and the AV segment delivered by unicast delivery through a broadband is received.

Note that in this determination process, the determination can be made on the basis of information described in SCS, as long as the receiver (client) 30 is configured to be able to receive data in any mode. However, if the information is not described in SCS, the determination is made according to preliminarily set information or information set by a user.

Further, the receiver (client) 30 performs the reception process in one of the modes, if the receiver is configured to be able to receive data in only one of the modes.

### (Steps S171 to S172)

The process of steps S171 to S172 is a process when the AV segment delivered by broadcast delivery through a broadcast wave or the like is received.

In step S171, the AV segment is delivered by broadcast delivery through a broadcast wave or the like from the broadcasting server (ATSC server) 21.

In step S172, the communication data processing unit of the receiver (client) 30 receives the AV segment transmitted from the broadcasting server (ATSC server) 21 through a broadcast wave or the like.

Note that in this reception process, for example, the process to which the access information of the AV segment acquired from the MPD signaling instance is applied is performed.

### (Steps S175 to S177)

The process of steps S175 to S177 is a process when the AV segment delivered by unicast delivery through a broadband is received.

In step S175, the communication data processing unit of the receiver (client) 30 transmits, to the data transmission server (DASH server) 22, for example, the HTTP request to which the access information of the AV segment acquired from the MPD signaling instance is applied.

In response to the HTTP request from the receiver (client) 30, the data transmission server (DASHC server) 22 transmits, to the receiver (client) 30, the HTTP response which is the HTTP packet storing the AV segment.

In step S177, the communication data processing unit of the receiver (client) 30 receives the HTTP response from the data transmission server (DASHC server) 22.

Note that the process of steps S175 to S177 is repeatedly executed until the predetermined content data transmission/reception is completed.

### (Step S181)

Next, in step S181, the communication data processing unit of the receiver (client) 30 performs a process of temporarily storing (caching) the AV segment, which is received from the broadcasting server (ATSC server) 21 or the data transmission server (DASHC server) 22, in a cache device, and outputs cache data to the reproduction processing unit.

### (Step S182)

The reproduction processing unit of the receiver (client) 30 performs the process of storing, in a buffer, the cache data, or the AV segment, which is received from the communication data processing unit, sequentially acquiring the buffer storing data, executing a decoding process, and outputting the data via an output unit (display/speaker).

Note that codec information for the decoding process and information, such as an angle of view for display, are information that can be acquired from the MPD signaling instance, and a process is performed, as needed, with reference to the MPD signaling instance.

Note that in the sequence described above with reference to Figs. 15 to 17, configuration examples using two devices, i.e., the data delivery server 22 and the broadcasting server 21, are described as the configuration of the transmitter. However, it is possible to employ a configuration in which the processes of these two devices may be executed by one transmitter. It is also possible to employ a configuration in which the data delivery server and the broadcasting server are each configured as a plurality of servers, and the receiver can receive the data from a neighboring server depending on the location or the like of the receiver (client).

### [7. Regarding a specific example of a data delivery process]

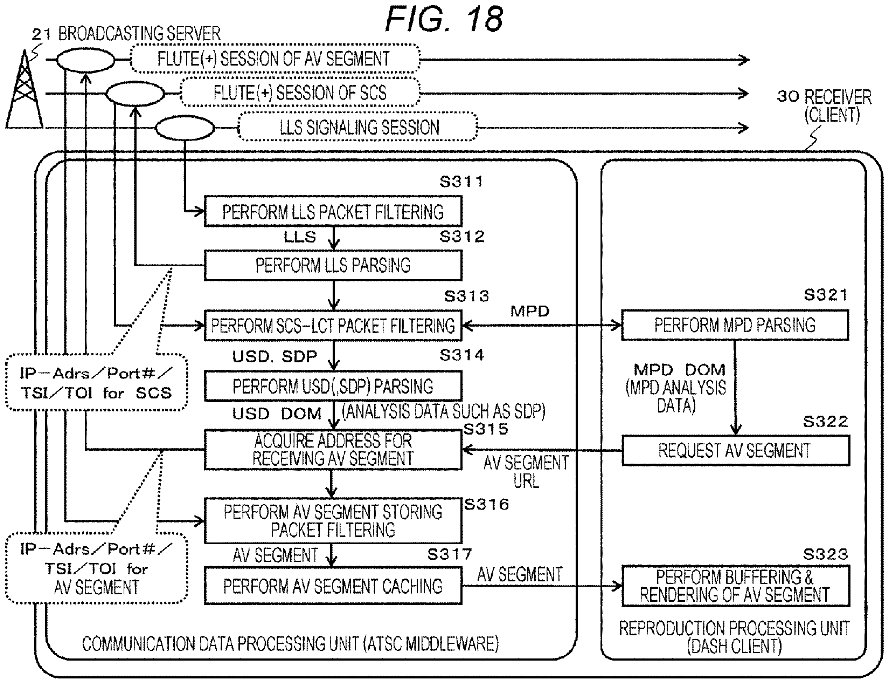

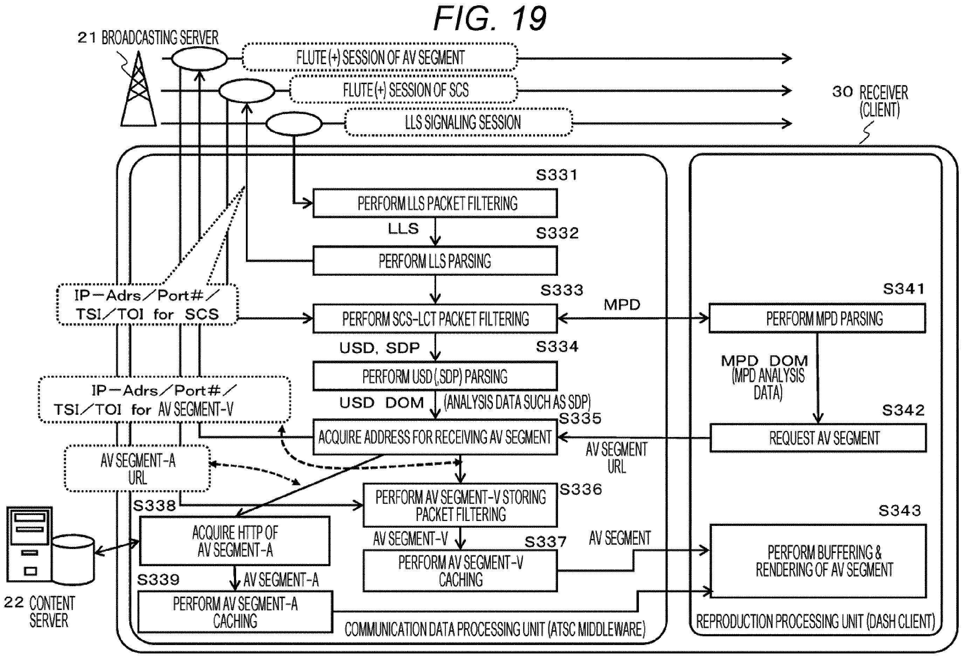

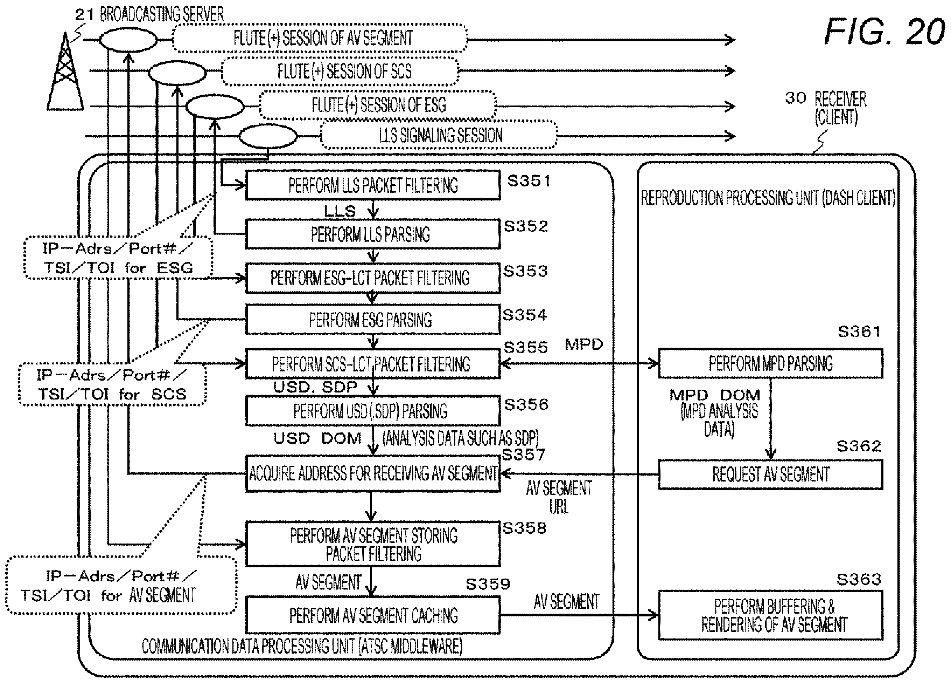

Next, a process sequence of the receiver (client) 30 in the following three specific examples will be described as examples of the data delivery process from the transmitter (server) 20 to the receiver (client) 30.
(Processing example 1) A process example when only broadcast delivery data through a broadcast wave or the like is received (Fig. 18)
(Processing example 2) A process example when two pieces of delivery data, i.e., broadcast delivery data through a broadcast wave or the like and unicast delivery data such as point 2 point (P2P) (Fig. 19)
(Processing example 3) A process example when only broadcast delivery data through a broadcast wave or the like is received and electronic service guide (ESG) composed of data, such as a program table, is used (Fig. 20)

### (Processing example 1)

First, a processing example when only broadcast delivery data through a broadcast wave or the like is received will be described with reference to Fig. 18.

In the example shown in Fig. 18, only the communication process between the broadcasting server 21 that performs broadcast delivery through a broadcast wave or the like and the receiver (client) 30 is performed. Basically, the receiver (client) 30 receives uni-directional delivery data from the broadcasting server 21.

Note that the receiver (client) 30 includes the following two data processing units:
(a) a communication data processing unit; and
(b) a reproduction processing unit.

The communication data processing unit is configured of, for example, ATSC middleware that executes a process for communication data compliant with the ATSC standard. Further, the reproduction processing unit is configured as a DASH client that executes a process for data compliant with the DASH standard.

As shown in Fig. 18, the broadcasting server 21 executes the delivery of the following three types of data through three communication sessions, i.e., the following three types:
(a) a FLUTE(+) session for delivering the AV segment storing an image audio constituting a content to be reproduced;
(b) a FLUTE(+) session for delivering service channel signaling (SCS) which is signaling data including guide information and control information required for reception and reproduction of the AV segment; and
(c) an LLS signaling session for delivering the low layer signaling (LLS) such as communication setting information and address information to be applied to the data reception in the receiver (client).

Note that the AV segment and SCS are delivered in accordance with the FLUTE(+) protocol.

Further, the XML signaling template and the difference information, which are described in the above example, are applied to the signaling data SCS and LLS, and the signaling data SCS and LLS are provided from the broadcasting server 21 to the receiver (client) 30.

Specifically, the XML signaling template is shared in advance between the broadcasting server 21 and the receiver (client) 30, and only the difference information is successively, repeatedly transmitted.

The receiver (client) 30 receives the difference information at an arbitrary timing, performs, on the XML signaling template acquired in advance and stored in the storage unit, transformation (addition, modification, or deletion) of the template to which the difference information is applied, and generates the XML signaling instance.

In this example, generation of the XML signaling instance of SCS and the XML signaling instance of LLS is executed.

The receiver (client) 30 performs the process of acquiring information required for reception, reproduction, and the like of the AV segment with reference to the generated XML signaling instances.

Each process step of the process to be executed by the receiver (client) 30 shown in Fig. 18 will be sequentially described.

### (Steps S311 to 312)

In steps S311 to S312, the communication data processing unit of the receiver (client) 30 executes LLS packet filtering and parsing.

Specifically, the communication data processing unit receives the LLS packet by executing the access to the LLS signaling session for delivering the low layer signaling (LLS) which is signaling data including communication setting information, address information, and the like, analyzes the data acquired from the LLS packet, and generates the LLS-compliant XML signaling instance.

Note that as described above, the broadcasting server 21 repeatedly transmits only the LLS-compliant difference information in the LLS signaling session.

The data transmission of only the difference information as described above reduces the load on the broadcasting server 21 and reduces the compression of the network band.

The receiver (client) 30 receives the difference information at an arbitrary timing, performs, on the XML signaling template acquired in advance and stored in the storage unit, transformation of (addition, modification, or deletion) of the template to which the difference information is applied, and generates the LLS-compliant XML signaling instance.

The receiver (client) 30 acquires the access information of SCS, which is the other signaling data, with reference to the generated LLS-compliant XML signaling instance.

The LLS-compliant XML signaling instance records the access information (IP address, port No, TSI/TOI) of SCS, and the receiver (client) 30 can acquire the SCS-LCT packet storing the SCS signaling data by using the access information.

Note that TSI represents a transmission session identifier compliant with the FLUTE(+) protocol, and TOI represents a transmission object identifier for identifying a specific object in a session.

### (Steps S313 to S315; steps S321 to 322)

Next, in steps S313 to S315, the communication data processing unit of the receiver (client) 30 performs SCS-LCT packet filtering and parsing, and also performs the process of acquiring the address for receiving the AV segment.

SCS represents service channel signaling and is signaling data including guide information and control information corresponding to the content provided to the user. As shown in Fig. 18, SCS is successively delivered in the FLUTE(+) session set by the broadcasting server 21.

The communication data processing unit of the receiver (client) 30 accesses the FLUTE(+) session set by the broadcasting server 21 by using the access information of SCS acquired from the LLS-compliant XML signaling instance, acquires and analyzes the SCS-LCT packet including SCS as signaling data, and generates the SCS-compatible XML signaling instance.

Note that as described above, the broadcasting server 21 repeatedly transmits only the SCS-compatible difference information in the FLUTE(+) session of SCS.

The data transmission of only the difference information as described above reduces the load on the broadcasting server 21 and reduces the compression of the network band.

The receiver (client) 30 receives the difference information of SCS at an arbitrary timing, performs, on the XML signaling template acquired in advance and stored in the storage unit, transformation (addition, modification, or deletion) of the template to which the difference information is applied, and generates the SCS-compatible XML signaling instance.

The SCS-XML signaling instance includes USD as signaling data. Further, as described above with reference to Fig. 3, USD includes various pieces of signaling data, such as SDP and MPD.

Accordingly, the process of generating the SCS-XML signaling instance enables generation of the XML signaling instance compatible with SDP or MPD.

In this manner, the process of generating the SCS-XML signaling instance by applying the SCS-compatible XML signaling template and SCS-compatible difference information allows the receiver (client) 30 to refer to the XML signaling instance corresponding to various pieces of information, such as SDP, and MPD.

In step S314, the communication data processing unit of the receiver (client) 30 executes the analysis of the signaling data such as USD and SDP.

Further, in step S321, the reproduction processing unit of the receiver (client) 30 executes the MPD analysis process. MPD stores a URL for accessing the AV segment.

In step S322, the reproduction processing unit of the receiver (client) 30 outputs the AV segment URL to the communication data processing unit, and executes a request for requiring acquisition of a content (AV segment).

The communication data processing unit of the receiver (client) 30 acquires the address for receiving the AV segment on the basis of the acquired URL and recorded information of USD, when the AV segment acquisition request involving the AV segment URL is input from the reproduction processing unit.

The SDP-compatible XML signaling instance records the access information (IP address, port No, TSI/TOI) of the AV segment, and the receiver (client) 30 can acquire the AV segment using this access information.

### (Steps S316 to S317, step S323)

Next, in steps S316 to S317, the communication data processing unit of the receiver (client) 30 receives the AV segment storing packet and performs filtering and caching.

As shown in Fig. 18, the AV segment is delivered in the FLUTE(+) session set by the broadcasting server 21.

The communication data processing unit of the receiver (client) 30 accesses the FLUTE(+) session set by the broadcasting server 21 by applying the access information (IP address, port No, TSI/TOI) of the AV segment acquired in step S315, , and acquires the packet storing an objective content.

Further, the packet is analyzed and the AV segment stored in the packet is cached.

Further, the communication data processing unit of the receiver (client) 30 outputs the cached AV segment to the reproduction processing unit.

In step S323, the reproduction processing unit performs the process of acquiring the AV segment from the communication data processing unit, storing the AV segment in a buffer, sequentially executing a decoding process, and outputting (rendering) a decoding content to the output unit, such as a non-display unit.

### (Processing example 2)

Next, a processing example when two pieces of delivery data, i.e., broadcast delivery data through a broadcast wave or the like, and unicast delivery data, such as point 2 point (P2P), will be described with reference to Fig. 19.

In the example shown in Fig. 19, a communication process among the broadcast server 21, which performs broadcast delivery through a broadcast wave or the like, the content server 22, which performs unicast delivery in response to an HTTP request response or the like, and the receiver (client) 30. Basically, the uni-directional delivery data from the broadcasting server 21 is transmitted to the receiver (client) 30. A bidirectional communication is performed between the content server 22 and the receiver (client) 30.

Note that the receiver (client) 30 includes the following two data processing units:
(a) a communication data processing unit; and
(b) a reproduction processing unit.

The communication data processing unit is composed of, for example, ATSC middleware that executes a process for communication data compliant with the ATSC standard. Further, the reproduction processing unit is configured as a DASH client that executes a process for data compliant with the DASH standard.

As shown in Fig. 19, the broadcasting server 21 executes delivery of three types of data through three communication sessions, i.e., the following three types:
(a) a FLUTE(+) session for delivering the AV segment storing an image audio constituting a content to be reproduced;
(b) a FLUTE(+) session for delivering service channel signaling (SCS) which is signaling data including guide information and control information required for reception and reproduction of the AV segment; and
(c) an LLS signaling session for delivering low layer signaling (LLS) including communication setting information, address information, and the like to be applied to the data reception in the receiver (client).

Note that the AV segment and SCS are delivered in accordance with the FLUTE(+) protocol.

Further, the signaling data SCS and LLS are provided from the broadcasting server 21 to the receiver (client) 30 according to the above example.

Specifically, the XML signaling template is shared in advance between the broadcasting server 21 and the receiver (client) 30, and only the difference information is successively, repeatedly transmitted.

The receiver (client) 30 receives the difference information at an arbitrary timing, performs, on the XML signaling template acquired in advance and stored in the storage unit, transformation (addition, modification, or deletion) of the template to which the difference information is applied, and generates the XML signaling instance.

In this example, the generation the XML signaling instance of SCS and the XML signaling instance of LLS is executed.

The receiver (client) 30 performs the process of acquiring the information required for reception, reproduction, and the like of the AV segment with reference to the generated XML signaling instances.

In the processes executed by the receiver (client) 30 shown in Fig. 19, the process of steps S331 to S335 executed by the communication data processing unit and the process of steps S341 to S342 executed by the reproduction processing unit are substantially similar to the processes described with reference to Fig. 18.

In this case, however, the communication data processing unit executes the following two address acquisition processes in the process of acquiring the address for receiving the AV segment in step S335. That is, the processes for acquiring the following two addresses are carried out:
(1) the address for receiving the AV segment delivered from the broadcasting server 21; and
(2) the address for receiving the AV segment from the content server 22.

The example shown in Fig. 19 is an example in which image data (video) is acquired from the delivery data of the broadcasting server 21 and audio data (audio) is acquired from the content server 22.

In step S335, the communication data processing unit acquires the above-mentioned two addresses for receiving the AV segment on the basis of the acquired URL and recorded information of USD, when the AV segment acquisition request involving the AV segment URL is input from the reproduction processing unit.

In steps S316 to S317, the image data (AV segment-V) from the broadcasting server 21 is acquired and cached using the address for accessing image data (video).

This process is a process similar to that described above with reference to Fig. 18.

Further, in steps S318 to S319, the audio data (AV segment-A) from the content server 22 is acquired using the address for accessing audio data (audio).

This audio data acquisition process is performed by P2P communication to which the HTTP request response process is applied.

The communication data processing unit repeatedly executes the HTTP request response, and acquires and caches the audio data (AV segment-A).

Further, the communication data processing unit of the receiver (client) 30 outputs the individually cached image data (AV segment-V) and audio data (AV segment-A) to the reproduction processing unit.

In step S343, the reproduction processing unit performs the process of acquiring image data (AV segment-V) and audio data (AV segment-A) from the communication data processing unit, storing the data in a buffer, sequentially executing a decoding process, and outputting (rendering) a decoding content to the output unit, such as a non-display unit.

### (Processing example 3)

Next, a processing example when only broadcast delivery data through a broadcast wave or the like, is received and electronic service guide (ESG) composed of data, such as a program table, is used will be described with reference to Fig. 20.

In the example shown in Fig. 20, like in (Processing example 1) described above with reference to Fig. 18, only a communication process between the broadcasting server 21, which performs broadcast delivery through a broadcast wave or the like, and the receiver (client) 30 is performed. Basically, the receiver (client) 30 receives uni-directional delivery data from the broadcasting server 21.

Note that receiver (client) 30 includes the following two data processing units:
(a) a communication data processing unit; and
(b) a reproduction processing unit.

The communication data processing unit is configured of, for example, ATSC middleware that executes a process for communication data compliant with the ATSC standard. Further, the reproduction processing unit is configured as a DASH client that executes a process for data compliant with the DASH standard.

As shown in Fig. 20, the broadcasting server 21 executes delivery of four types of data through three communication sessions. The four types of data are as follows:
(a) a FLUTE(+) session for delivering the AV segment storing an image audio constituting a content to be reproduced;
(b) a FLUTE(+) session for delivering service channel signaling (SCS) which is signaling data including guide information and control information required for reception and reproduction of the AV segment;
(c) a FLUTE (+) session for delivering electronic service guide (ESG) which is signaling data including guide information and control information required for reception and reproduction of the AV segment; and
(d) an LLS signaling session for delivering low layer signaling (LLS) including communication setting information, address information, and the like to be applied to the data reception in the receiver (client).

Note that the AV segment, SCS, and ESG are delivered in accordance with the FLUTE(+) protocol.

Further, the signaling data SCS, ESG, and LLS are provided from the broadcasting server 21 to the receiver (client) 30 by applying the XML signaling template and difference information described in the above example.

Specifically, the XML signaling template is shared in advance between the broadcasting server 21 and the receiver (client) 30, and only the difference information is successively, repeatedly transmitted.

The receiver (client) 30 receives the difference information at an arbitrary timing, performs, on the XML signaling template acquired in advance and stored in the storage unit, transformation (addition, modification, or deletion) of the template to which the difference information is applied, and generates the XML signaling instance.

In this example, in addition to the generation of the XML signaling instance of SCS and the XML signaling instance of LLS, the generation of the XML signaling instance of ESG is executed.

The receiver (client) 30 performs the process of acquiring the information required for reception, reproduction, and the like of the AV segment with reference to the generated XML signaling instances.

Each step of the process executed by the receiver (client) 30 as shown in Fig. 20 will be sequentially described below.

### (Steps S351 to 352)

The communication data processing unit of the receiver (client) 30 executes LLS packet filtering and parsing in steps S351 to S352.

Specifically, the communication data processing unit executes access to the LLS signaling session for delivering low layer signaling (LLS) which is signaling data including communication setting information, address information, and the like, receives the LLS packet, analyzes the data acquired from the LLS packet, and generates the LLS-compliant XML signaling instance.

Note that as described above, the broadcasting server 21 repeatedly transmits only LLS-compliant difference information in the LLS signaling session.

The data transmission of only the difference information as described above reduces the load on the broadcasting server 21 and reduces the compression of the network band.

The receiver (client) 30 receives the difference information at an arbitrary timing, performs, on the XML signaling template acquired in advance and stored in the storage unit, transformation (addition, modification, or deletion) of the template to which the difference information is applied, and generates the LLS-compliant XML signaling instance.

The receiver (client) 30 acquires the access information of ESG, which is the other signaling data, with reference to the generated LLS-compliant XML signaling instance.

The LLS-compliant XML signaling instance records the access information (IP address, port No, TSI/TOI) of ESG, and the receiver (client) 30 can acquire the ESG-LCT packet storing the ESG signaling data using this access information.

### (Steps S353 to 354)

Next, the communication data processing unit of the receiver (client) 30 executes ESG-LCT packet filtering and parsing in steps S353 to S354.

Specifically, the communication data processing unit executes access to the ESG-FLUTE(+) session, receives the ESG-LCT packet, analyzes the data acquired from the ESG-LCT packet, and generates the ESG-compatible XML signaling instance.

Note that as described above, the broadcasting server 21 repeatedly transmits only the ESG-compatible difference information in the FLUTE(+) session of ESG.

The data transmission of only the difference information as described above reduces the load on the broadcasting server 21 and reduces the compression of the network band.

The receiver (client) 30 receives the difference information at an arbitrary timing, performs, on the XML signaling template acquired in advance and stored in the storage unit, transformation (addition, modification, or deletion) of the template to which the difference information is applied, and generates the ESG-compatible XML signaling instance.

The receiver (client) 30 acquires the access information of SCS, which is the other signaling data, with reference to the generated ESG-compatible XML signaling instance.

In this example, the ESG-compatible XML signaling instance records the access information (IP address, port No, TSI/TOI) of SCS, and the receiver (client) 30 acquires the SCS-LCT packet storing the SCS signaling data using this access information.

The following process of steps S355 to S359, which is the process executed by the communication data processing unit, and the process of steps S361 to S363, which is the process executed by the reproduction processing unit, are processes similar to the process (steps S314 to S317) executed by the communication data processing unit and the process (steps S321 to S323) executed by the reproduction processing unit as described above with reference to Fig. 18.

### [8. Regarding a process of transforming XML data to which difference information is applied]

As described above, the transmitter and the receiver of the present disclosure are configured to share the XML signaling template, which is a template for XML data corresponding to signaling data, in advance, and the transmitter is configured to successively deliver the difference information.

The receiver receives the difference information delivered by the transmitter, executes transformation process (addition, modification, or deletion) on the XML signaling template, and generates the actually available XML signaling instance.

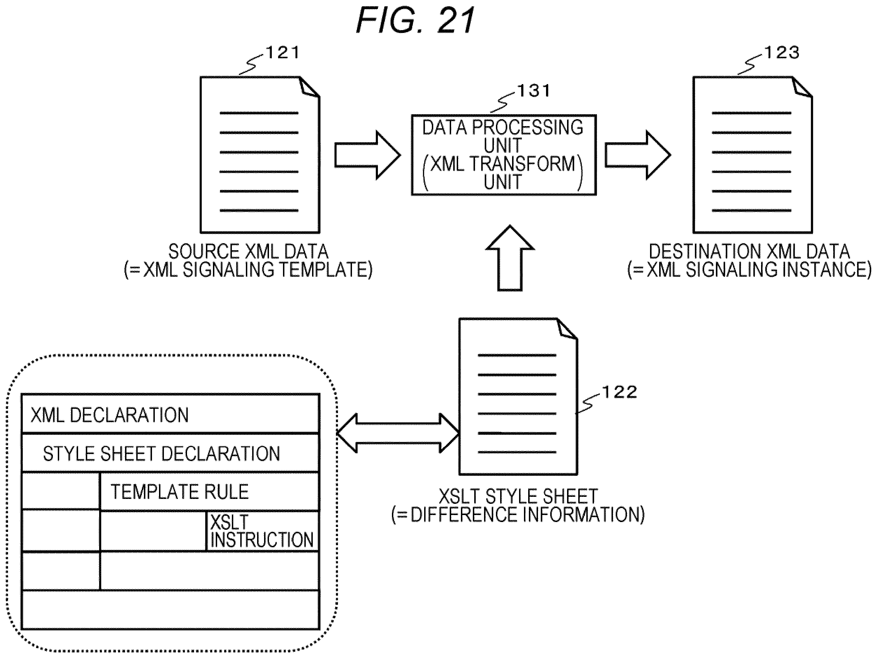

An example of a specific method for the XML data transformation process to which the difference information is applied will be described with reference to Fig. 21.

As described above, there are various methods for describing the difference information. For example, the difference information can be described by applying an XML transformation language such as XML stylesheet language transformation (XSLT).

In XSLT, the XML data transformation process is performed using the XSLT style sheet recording the XML data transformation rule.

Fig. 21 shows an XSLT stylesheet 122 as an example.

The XSLT stylesheet 122 records a template rule. The template rule is composed of a template and a pattern. The template rule is applied to a node that matches the pattern in source XML data, and the XML data is transformed to thereby generate destination XML data.

As shown in Fig. 21, source XML data 121 is set as the XML signaling template, and the XSLT stylesheet 122 is set as the difference information.

The data processing unit (XML transform unit) 131 performs the above-described processeson the basis of the two pieces of information and generates destination XML data 123, that is, the XML signaling instance.

Specifically, the data processing unit 131 extracts a template and a pattern from the template rule recorded in the XSLT stylesheet (difference information) 122, applies the template rule to a node that matches the pattern in the source XML data, i.e., the XML signaling template, and transforms the XML data to thereby generate the destination XML data, i.e., the XML signaling instance.

By such a method, the XML signaling instance can be generated by performing transformation (addition, modification, or deletion) of the XML signaling template and the XML data to which the difference information is applied.

Note that the difference information is not limited to the above-mentioned XSLT stylesheet. As long as the difference information is data recording a transformation mode and application data, difference information of various data forms can be set and used.

### [9. Regarding configuration examples of the transmitter and the receiver]

Next, configuration examples of the transmitter (server) 20 and the receiver (client) 30 which are communication devices will be described with reference to Figs . 22 and 23.

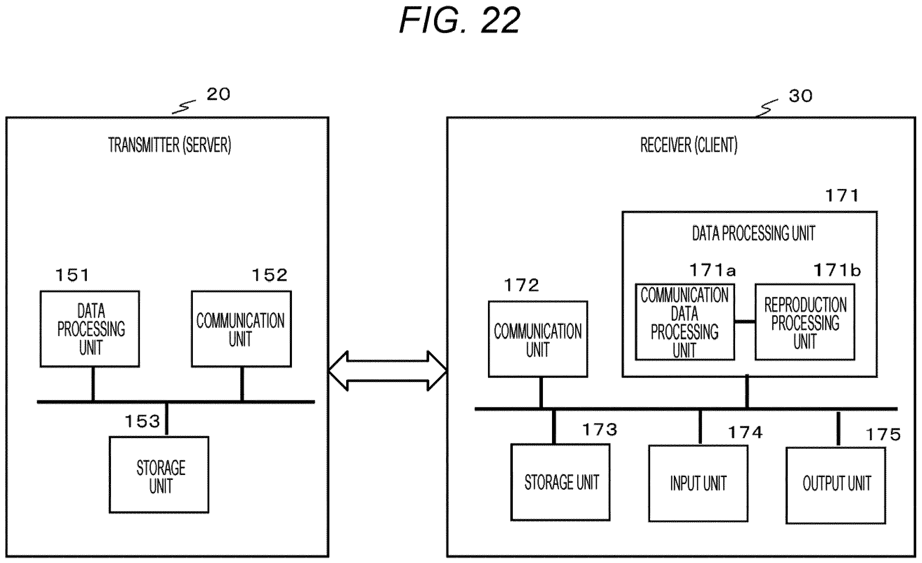

Fig. 22 shows configuration examples of the transmitter (server) 20 and the receiver (client) 30.

The transmitter (server) 20 includes a data processing unit 151, a communication unit 152, and a storage unit 53.

The receiver (client) 30 includes a data processing unit 171, a communication unit 172, a storage unit 173, an input unit 174, and an output unit 175.

The data processing unit includes a communication data processing unit 171a and a reproduction processing unit 171b.

The data processing unit 151 of the transmitter (server) 20 executes various data processes for executing the data delivery service. For example, the generation and transmission of the configuration data for the data delivery service are controlled. Further, the data processing unit 151 performs the process of generating and transmitting the signaling data to the receiver (client) 30.

Specifically, the process of generating and delivering the signaling data as well as the AV segment is generated. Note that the processes of generating and delivering the signaling data include a process of generating the XML signaling template, the difference information, and the XML signaling instance, and a transmission process.

The communication unit 152 performs the delivery of the signaling data, as well as the AV segment, and other communication processes. Specifically, the communication unit 152 performs, for example, the process of transmitting the XML signaling template, the difference information, and the XML signaling instance, as well as the AV segment.

The storage unit 153 stores the AV segment and signaling data to be delivered, specifically, the XML signaling template, the difference information, the XML signaling instance, or the like.

Further, the storage unit 153 is used as a work area for the data process executed by the data processing unit 151, and is also used as a storage area for various parameters.

On the other hand, the receiver (client) 30 includes a data processing unit 171, a communication unit 172, a storage unit 173, an input unit 174, and an output unit 175.

The communication unit 172 receives data, such as the AV segment and signaling data, which are delivered from the transmitter (server) 20.

Specifically, the communication unit 172 receives the XML signaling template, the difference information, the XML signaling instance, and the like.

The data processing unit 171 includes a communication data processing unit 171a and a reproduction processing unit 171b, and executes, for example, the processes described above with reference to Figs. 15 to 20.

Specifically, for example, the process of inputting the XML signaling template and the difference information and generating the XML signaling instance is executed.

Further, for example, the process for receiving, decoding, or reproducing the AV segment is executed with reference to the XML signaling instance.

An instruction command, such as a content designation command, from a user is input through the input unit 174.

The reproduced data is output to the output unit 175 such as a display unit or a speaker.

The storage unit 173 stores the AV segment and signaling data, specifically, the XML signaling template, the difference information, the XML signaling instance, and the like.

Further, the storage unit 173 is used as a work area for the data process executed by the data processing unit 171, and is also used as a storage area for various parameters.

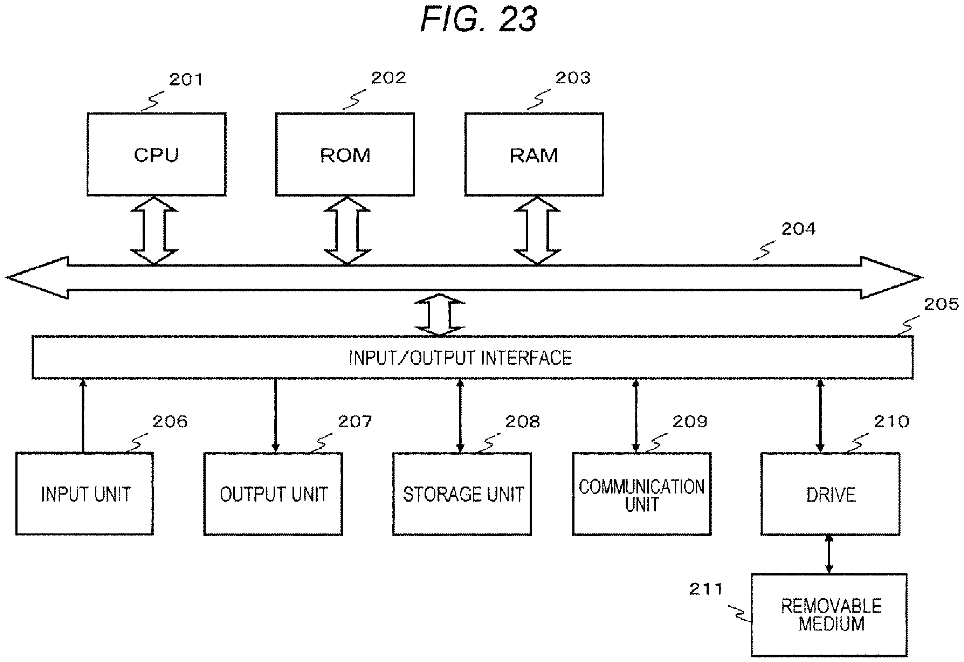

Fig. 23 shows a hardware configuration example of the communication device which is applicable as the transmitter 20 and the receiver 30.

A central processing unit (CPU) 201 functions as a data processing unit that executes various processes according to a program stored in a read only memory (ROM) 202 or a storage unit 208. For example, the CPU 201 executes processes corresponding to the sequence described in the above example. A random access memory (RAM) 203 stores programs and data to be executed by the CPU 201. The CPU 201, the ROM 202, and the RAM 203 are interconnected via a bus 204.

The CPU 201 is connected to an input/output interface 205 via the bus 204, and the input/output interface 205 is connected with an input unit 206, which is composed of various switches, a keyboard, a mouse, a microphone, or the like, and an output unit 207, which is composed of a display, a speaker, or the like. The CPU 201 executes various processes corresponding to commands input from the input unit 206, and outputs the process result to, for example, the output unit 207.

The storage unit 208 connected to the input/output interface 205 is composed of, for example, a hard disk, and stores programs and various pieces of data executed by the CPU 201. The communication unit 209 functions as a data communication transmission/reception unit and a broadcasting transmission/reception unit via a network, such as the Internet or a local area network, and communicates with an external device.

A drive 210 connected to the input/output interface 205, drives a removable medium 211, such as a semiconductor memory, for example, a magnetic disk, an optical disk, an opto-magnetic disk, or a memory card, and executes recording or reading of data.

Note that data coding or decoding can be executed as a process of the CPU 201 serving as a data processing unit, but instead a configuration including a codec as dedicated hardware for executing a coding process or a decoding process may be employed.

### [10. Summary of the configuration of the present disclosure]

Examples of the present disclosure have been discussed above with reference to specific examples. However, it is obvious that modification and substitution of the examples can be made without departing from the scope of the present disclosure. In other words, the present invention is disclosed in the form of illustration and should not be limitatively interpreted. To judge the scope of the present disclosure, the scope of claims should be taken into consideration.

Further, a series of processes described in the specification can be executed by hardware or software or by a combination thereof. When the processes are executed by software, the processes can be executed by installing a program storing the process sequence in a memory within a computer having dedicated hardware built therein, or by installing the program in a general-purpose computer capable of executing various processes. For example, the program can be preliminarily recorded in a recording medium. In addition to installing the program from the recording medium to the computer, the program can be received via a network, such as, a local area network (LAN) or the Internet, and can be installed in a recording medium such as a built-in hard disk.

Note that various processes described in the specification are not only executed in time series according to the description, but may be executed in parallel or individually according to the processing ability of the device for executing the processes or if needed. Further, the system in the present specification is a logical assembly configuration of a plurality of devices, and is not limited to the devices having each configuration in the same housing.

### INDUSTRIAL APPLICABILITY

As described above, according to a configuration of an example of the present disclosure, a device and a method for implementing an efficient delivery of signaling data required for reception and reproduction of a content are achieved.

Specifically, the receiver stores and holds, in a storage unit, a signaling template as a template for generating a signaling instance required for a content reception process and a content reproduction process. The transmitter transmits, to the receiver, difference information as data to be applied to the signaling template and used for generating a signaling instance. The receiver generates the signaling instance by applying the difference information received from the transmitter to the signaling template, and receives and reproduces a content with reference to the generated signaling instance.

With this configuration, a device and a method for implementing an efficient delivery of signaling data required for reception and reproduction of the content are achieved.

### REFERENCE SIGNS LIST

- 10: Communication system
- 20: Transmitter
- 21: Broadcasting server
- 22: Data delivery server
- 30: Receiver
- 31: TV
- 32: PC
- 33: Mobile terminal
- 50: Signaling data
- 60: AV segment
- 111: XML signaling template
- 112: XML signaling instance
- 113: Difference information
- 114: XML signaling instance
- 121: Source XML data
- 122: XSLT stylesheet
- 123: Destination XML data
- 151: Data processing unit
- 152: Communication unit
- 153: Storage unit
- 171: Data processing unit
- 172: Communication unit
- 173: Storage unit
- 174: Input unit
- 175: Output unit
- 201: CPU
- 202: ROM
- 203: RAM
- 204: Bus
- 205: Input/output interface
- 206: Input unit
- 207: Output unit
- 208: Storage unit
- 209: Communication unit
- 210: Drive
- 211: Removable media

## Claims

1. A receiver comprising:
a storage unit adapted to store a signaling template, the signaling template being a template for generating a signaling instance, the signaling instance including signaling data required for reception and reproduction of a content;
a communication unit adapted to receive difference information as data to be applied to the signaling template and used for generating a signaling instance; and
a data processing unit adapted to generate the signaling instance by applying the difference information to the signaling template,
wherein
the difference information includes:
an identifier of a signaling template to which difference information is applied; and
an identifier of a signaling instance generated by the process of applying the difference information to the signaling template,
the data processing unit is adapted to set a signaling instance identifier recorded in difference information to the signaling instance generated as a result of executing the process of applying the difference information by selecting and applying a signaling template including the same identifier as the identifier of the signaling template recorded in the difference information.

2. The receiver according to claim 1, wherein
the difference information includes application mode information for the signaling template, the application mode information is information indicating a process of one of addition, modification, and deletion of data for the signaling template, and
the data processing unit is adapted to execute a process of applying the difference information to the signaling template according to application mode information recorded in the difference information.

3. The receiver according to claim 1, wherein
the difference information includes application mode information for the signaling template and application data, and
the data processing unit is adapted to generate a signaling instance required for reception and reproduction of a content by executing, on the signaling template, a process of applying the application data according to the application mode information recorded in the difference information.

4. The receiver according to claim 1, wherein
the signaling template is extensible markup language (XML) data,
the difference information includes information for an XML data conversion process, and
the data processing unit is adapted to generate a signaling instance including XML data by the process of applying the difference information to the signaling template.

5. The receiver according to claim 1, wherein the signaling instance includes access information of an AV segment as data to be received and reproduced by the receiver.

6. The receiver according to claim 1, wherein
the difference information is data to be transmitted according to a file delivery over uni-directional transport (FLUTE) protocol as a communication protocol, or according to a FLUTE+ protocol as an expanded protocol of the FLUTE protocol, and
the data processing unit is adapted to extract the difference information from transmitted data according to the FLUTE protocol or the FLUTE+ protocol.

7. A transmitter comprising:
a data processing unit adapted to detect a difference between a signaling instance including signaling data applied for content reception and reproduction in a receiver and a signaling template held by the receiver, and to generate difference information; and
a communication unit adapted to transmit the difference information;
wherein
the difference information includes:
an identifier of a signaling template to which difference information is applied; and
an identifier of a signaling instance generated by the process of applying the difference information to the signaling template.

8. The transmitter according to claim 7, wherein the difference information includes application mode information for the signaling template and application data, the difference information being information capable of generating a signaling instance required for reception and reproduction of a content by a process of applying the application data according to the application mode information for the signaling template held by the receiver.

9. A data processing method to be executed in a receiver, comprising storing a signaling template, the signaling template being a template for generating a signaling instance, the signaling instance including signaling data required for reception and reproduction of a content,
receiving difference information as data to be applied to the signaling template and used for generating a signaling instance, and
generating the signaling instance by applying the difference information to the signaling template,
wherein
the difference information includes:
an identifier of a signaling template to which difference information is applied; and
an identifier of a signaling instance generated by the process of applying the difference information to the signaling template,
the method further comprising:
setting a signaling instance identifier recorded in difference information to the signaling instance generated as a result of executing the process of applying the difference information by selecting and applying a signaling template including the same identifier as the identifier of the signaling template recorded in the difference information.

10. A data processing method to be executed in a transmitter, comprising:
detecting, by a data processing unit, a difference between a signaling instance including signaling data applied for content reception and reproduction in a receiver and a signaling template held by the receiver,
generating, by the data processing unit, difference information; and
transmitting, by a communication unit, the difference information;
wherein
the difference information includes:
an identifier of a signaling template to which difference information is applied; and
an identifier of a signaling instance generated by the process of applying the difference information to the signaling template.

## Patentansprüche

1. Empfänger, aufweisend:
eine Datenspeichereinheit, die dafür ausgelegt ist, eine Signalisierungsvorlage zu speichern, wobei die Signalisierungsvorlage eine Vorlage zum Generieren einer Signalisierungsinstanz ist, wobei die Signalisierungsinstanz Signalisierungsdaten aufweist, die für den Empfang und die Wiedergabe eines Inhalts erforderlich sind;
eine Kommunikationseinheit, die dafür ausgelegt ist, Differenzinformationen als Daten zu empfangen, die auf die Signalisierungsvorlage angewendet und für das Generieren einer Signalisierungsinstanz verwendet werden sollen; und
eine Datenverarbeitungseinheit, die dafür ausgelegt ist, die Signalisierungsinstanz durch Anwenden der Differenzinformationen auf die Signalisierungsvorlage zu generieren, wobei
die Differenzinformationen aufweisen:
eine Kennung einer Signalisierungsvorlage, auf die Differenzinformationen angewendet werden; und
eine Kennung einer Signalisierungsinstanz, die durch den Prozess des Anwendens der Differenzinformationen auf die Signalisierungsvorlage generiert wird,
die Datenverarbeitungseinheit dafür ausgelegt ist, eine Signalisierungsinstanz-Kennung, die in Differenzinformationen aufgezeichnet ist, auf die Signalisierungsinstanz einzustellen, die als Ergebnis des Ausführens des Prozesses des Anwendens der Differenzinformationen generiert wird, indem eine Signalisierungsvorlage ausgewählt und angewendet wird, welche dieselbe Kennung aufweist wie die Kennung der Signalisierungsvorlage, die in den Differenzinformationen aufgezeichnet ist.

2. Empfänger gemäß Anspruch 1, wobei
die Differenzinformationen Anwendungsmodus-Informationen für die Signalisierungsvorlage aufweisen, wobei es sich bei den Anwendungsmodus-Informationen um Informationen handelt, die einen Prozess von einem von einer Addition, einer Modifikation und einer Löschung von Daten für die Signalisierungsvorlage angeben, und
die Datenverarbeitungseinheit dafür ausgelegt ist, einen Prozess des Anwendens der Differenzinformationen auf die Signalisierungsvorlage gemäß Anwendungsmodus-Informationen auszuführen, die in den Differenzinformationen aufgezeichnet sind.

3. Empfänger gemäß Anspruch 1, wobei
die Differenzinformationen Anwendungsmodus-Informationen für die Signalisierungsvorlage und Anwendungsdaten aufweisen, und
die Datenverarbeitungseinheit dafür ausgelegt ist, eine Signalisierungsinstanz zu generieren, die für den Empfang und die Wiedergabe eines Inhalts erforderlich ist, indem, für die Signalisierungsvorlage, ein Prozess des Anwendens der Anwendungsdaten gemäß den Anwendungsmodus-Informationen ausgeführt wird, die in den Differenzinformationen aufgezeichnet sind.

4. Empfänger gemäß Anspruch 1, wobei
es sich bei der Signalisierungsvorlage um Daten in der erweiterbaren Auszeichnungssprache (Extensible Markup Language, XML) handelt,
die Differenzinformationen Informationen für einen XML-Datenumwandlungsprozess aufweisen, und
die Datenverarbeitungseinheit dafür ausgelegt ist, eine Signalisierungsinstanz mit XML-Daten durch den Prozess des Anwendens der Differenzinformationen auf die Signalisierungsvorlage zu generieren.

5. Empfänger gemäß Anspruch 1, wobei die Signalisierungsinstanz Zugangsinformationen eines AV-Segments als Daten aufweist, die von dem Empfänger empfangen und wiedergegeben werden sollen.

6. Empfänger gemäß Anspruch 1, wobei
es sich bei den Differenzinformationen um Daten handelt, die gemäß einer Dateibereitstellung über das FLUTE (File Delivery over Uni-directional Transport)-Protokoll als Kommunikationsprotokoll übertragen werden sollen, oder gemäß einem FLUTE+-Protokoll als erweitertes Protokoll des FLUTE-Protokolls, und
die Datenverarbeitungseinheit dafür ausgelegt ist, die Differenzinformationen aus übertragenen Daten gemäß dem FLUTE-Protokoll oder dem FLUTE+-Protokoll zu extrahieren.

7. Sender, aufweisend:
eine Datenverarbeitungseinheit, die dafür ausgelegt ist, eine Differenz zwischen einer Signalisierungsinstanz mit Signalisierungsdaten, die zum Empfang und zur Wiedergabe von Inhalten in einem Empfänger angewendet werden, und einer Signalisierungsvorlage, die von dem Empfänger gehalten wird, zu detektieren und Differenzinformationen zu generieren; und
eine Kommunikationseinheit, die dafür ausgelegt ist, die Differenzinformationen zu übertragen;
wobei
die Differenzinformationen aufweisen:
eine Kennung einer Signalisierungsvorlage, auf die Differenzinformationen angewendet werden; und
eine Kennung einer Signalisierungsinstanz, die durch den Prozess des Anwendens der Differenzinformationen auf die Signalisierungsvorlage generiert wird.

8. Sender gemäß Anspruch 7, wobei die Differenzinformationen Anwendungsmodus-Informationen für die Signalisierungsvorlage und Anwendungsdaten aufweisen, wobei es sich bei den Differenzinformationen um Informationen handelt, die in der Lage sind,
eine Signalisierungsinstanz zu generieren, die für den Empfang und die Wiedergabe eines Inhalts erforderlich ist, durch einen Prozess des Anwendens der Anwendungsdaten gemäß den Anwendungsmodus-Informationen für die Signalisierungsvorlage, die von dem Empfänger gehalten wird.

9. Datenverarbeitungsverfahren, das in einem Empfänger ausgeführt werden soll, aufweisend:
Speichern einer Signalisierungsvorlage, wobei die Signalisierungsvorlage eine Vorlage zum Generieren einer Signalisierungsinstanz ist, wobei die Signalisierungsinstanz Signalisierungsdaten aufweist, die für den Empfang und die Wiedergabe eines Inhalts erforderlich sind,
Empfangen von Differenzinformationen als Daten, die auf die Signalisierungsvorlage angewendet und für das Generieren einer Signalisierungsinstanz verwendet werden sollen; und
Generieren der Signalisierungsinstanz durch Anwenden der Differenzinformationen auf die Signalisierungsvorlage,
wobei
die Differenzinformationen aufweisen:
eine Kennung einer Signalisierungsvorlage, auf die Differenzinformationen angewendet werden; und
eine Kennung einer Signalisierungsinstanz, die durch den Prozess des Anwendens der Differenzinformationen auf die Signalisierungsvorlage generiert wird,
wobei das Verfahren ferner aufweist:
Einstellen einer Signalisierungsinstanz-Kennung, die in Differenzinformationen aufgezeichnet ist, auf die Signalisierungsinstanz, die als Ergebnis des Ausführens des Prozesses des Anwendens der Differenzinformationen generiert wird, indem eine Signalisierungsvorlage ausgewählt und angewendet wird, welche dieselbe Kennung aufweist wie die Kennung der Signalisierungsvorlage, die in den Differenzinformationen aufgezeichnet ist.

10. Datenverarbeitungsverfahren, das in einem Sender ausgeführt werden soll, aufweisend:
Detektieren, durch eine Datenverarbeitungseinheit, einer Differenz zwischen einer Signalisierungsinstanz mit Signalisierungsdaten, die zum Empfang und zur Wiedergabe von Inhalten in einem Empfänger angewendet werden, und einer Signalisierungsvorlage, die von dem Empfänger gehalten wird,
Generieren, durch die Datenverarbeitungseinheit, von Differenzinformationen; und
Übertragen, durch eine Kommunikationseinheit, der Differenzinformationen;
wobei
die Differenzinformationen aufweisen:
eine Kennung einer Signalisierungsvorlage, auf die Differenzinformationen angewendet werden; und
eine Kennung einer Signalisierungsinstanz, die durch den Prozess des Anwendens der Differenzinformationen auf die Signalisierungsvorlage generiert wird.

## Revendications

1. Récepteur comprenant :
une unité de mémorisation adaptée pour mémoriser un modèle de signalisation, le modèle de signalisation étant un modèle pour générer une instance de signalisation, l'instance de signalisation comportant des données de signalisation requises pour la réception et la reproduction d'un contenu ;
une unité de communication adaptée pour recevoir des informations de différence sous forme de données à appliquer au modèle de signalisation et utilisées pour générer une instance de signalisation ; et
une unité de traitement de données adaptée pour générer l'instance de signalisation en appliquant les informations de différence au modèle de signalisation, dans lequel
les informations de différence comportent :
un identifiant d'un modèle de signalisation auquel sont appliquées des informations de différence ; et
un identifiant d'une instance de signalisation générée par le processus d'application des informations de différence au modèle de signalisation,
l'unité de traitement de données est adaptée pour établir un identifiant d'instance de signalisation enregistré dans des informations de différence pour l'instance de signalisation générée à la suite de l'exécution du processus d'application des informations de différence en sélectionnant et appliquant un modèle de signalisation comportant le même identifiant que l'identifiant du modèle de signalisation enregistré dans les informations de différence.

2. Récepteur selon la revendication 1, dans lequel
les informations de différence comportent des informations de mode d'application pour le modèle de signalisation, les informations de mode d'application sont des informations indiquant un processus d'addition, de modification ou de suppression de données pour le modèle de signalisation, et
l'unité de traitement de données est adaptée pour exécuter un processus d'application des informations de différence au modèle de signalisation conformément aux informations de mode d'application enregistrées dans les informations de différence.

3. Récepteur selon la revendication 1, dans lequel
les informations de différence comportent des informations de mode d'application pour le modèle de signalisation et des données d'application, et
l'unité de traitement de données est adaptée pour générer une instance de signalisation requise pour la réception et la reproduction d'un contenu en exécutant, sur le modèle de signalisation, un processus d'application des données d'application conformément aux informations de mode d'application enregistrées dans les informations de différence.

4. Récepteur selon la revendication 1, dans lequel
le modèle de signalisation consiste en données de langage de balisage extensible (XML),
les informations de différence comportent des informations pour un processus de conversion de données XML, et
l'unité de traitement de données est adaptée pour générer une instance de signalisation comportant des données XML par le processus d'application des informations de différence au modèle de signalisation.

5. Récepteur selon la revendication 1, dans lequel l'instance de signalisation comporte des informations d'accès d'un segment AV comme données que doit recevoir et reproduire le récepteur.

6. Récepteur selon la revendication 1, dans lequel
les informations de différence sont des données à transmettre conformément à un protocole de délivrance de fichiers sur transport unidirectionnel (FLUTE) comme protocole de communication, ou conformément à un protocole FLUTE+ en tant que protocole élargi du protocole FLUTE, et
l'unité de traitement de données est adaptée pour extraire les informations de différence de données transmises conformément au protocole FLUTE ou au protocole FLUTE+.

7. Emetteur comprenant :
une unité de traitement de données adaptée pour détecter une différence entre une instance de signalisation comportant des données de signalisation appliquée pour la réception et la reproduction de contenu dans un récepteur et un modèle de signalisation détenu par le récepteur, et générer des informations de différence ; et
une unité de communication adaptée pour transmettre les informations de différence ;
dans lequel
les informations de différence comportent :
un identifiant d'un modèle de signalisation auquel sont appliquées des informations de différence ; et
un identifiant d'une instance de signalisation générée par le processus d'application des informations de différence au modèle de signalisation.

8. Emetteur selon la revendication 7, dans lequel les informations de différence comportent des informations de mode d'application pour le modèle de signalisation et des données d'applications, les informations de différence étant des informations capables de générer une instance de signalisation requise pour la réception et la reproduction d'un contenu par un processus d'application des données d'application conformément aux informations de mode d'application pour le modèle de signalisation détenu par le récepteur.

9. Procédé de traitement de données destiné à être exécuté dans un récepteur, comprenant
la mémorisation d'un modèle de signalisation, le modèle de signalisation étant un modèle pour générer une instance de signalisation, l'instance de signalisation comportant des données de signalisation requises pour la réception et la reproduction d'un contenu,
la réception d'informations de différence en tant que données à appliquer au modèle de signalisation et utilisées pour générer une instance de signalisation; et
la génération de l'instance de signalisation en appliquant les informations de différence au modèle de signalisation,
dans lequel
les informations de différence comportent :
un identifiant d'un modèle de signalisation auquel sont appliquées des informations de différence ; et
un identifiant d'une instance de signalisation générée par le processus d'application des informations de différence au modèle de signalisation,
le procédé comprenant en outre :
l'établissement d'un identifiant d'instance de signalisation enregistré dans des informations de différence pour l'instance de signalisation générée à la suite de l'exécution du processus d'application des informations de différence en sélectionnant et appliquant un modèle de signalisation comportant le même identifiant que l'identifiant du modèle de signalisation enregistré dans les informations de différence.

10. Procédé de traitement de données destiné à être exécuté dans un émetteur, comprenant :
la détection, par une unité de traitement de données, d'une différence entre une instance de signalisation comportant des données de signalisation appliquées pour la réception et la reproduction de contenu dans un récepteur et un modèle de signalisation détenu par le récepteur,
la génération, par l'unité de traitement de données, d'informations de différence ; et
la transmission, par une unité de communication, des informations de différence ; dans lequel
les informations de différence comportent :
un identifiant d'un modèle de signalisation auquel sont appliquées des informations de différence ; et
un identifiant d'une instance de signalisation générée par le processus d'application des informations de différence au modèle de signalisation.
